# EUROPEAN PATENT SPECIFICATION

(11) **EP 2 213 580 B1**
(45) Date of publication and mention of the grant of the patent: **28.09.2016**
(21) Application number: 08838289.0
(22) Date of filing: 10.10.2008
(51) Int. Cl.: B65D 1/40, B29C 45/14, B65D 1/00, B65D 25/20, B65D 25/34, B29L 9/00, B29L 22/00, B29C 45/16

(54) **INJECTION MOLDING COMPOSITE VESSEL AND ITS MANUFACTURING METHOD**
SPRITZGIESSVERBUNDBEHÄLTER UND HERSTELLUNGSVERFAHREN DAFÜR
RÉCIPIENT COMPOSITE DE MOULAGE PAR INJECTION ET SON PROCÉDÉ DE FABRICATION

(30) Priority: 12.10.2007 JP 2007267239; 04.04.2008 JP 2008098649
(43) Date of publication of application: 04.08.2010
(73) Proprietor: Yupo Corporation, Tokyo 101-0062 (JP); Sanyo Chemical Industrial Co., Ltd., Osaka 547-0002 (JP)
(72) Inventor: FUNATO, Takashi, Tokyo 101-0062 (JP); YASUDA, Hiromichi, Takarazuka-shi Hyogo 665-0876 (JP); KOBAYASHI, Masayuki, Osaka-shi Osaka 547-0002 (JP); YAMADA, Yoshihiro, Osaka-shi Osaka 547-0002 (JP)
(74) Representative: Zimmermann & Partner Patentanwälte mbB
(86) International application number: PCT/JP2008/068470
(87) International publication number: WO 2009/048139

(56) References cited:
- EP-A1- 1 724 088
- WO-A1-2006/106775
- DE-A1-102005 035 899
- JP-A- 2 184 884
- JP-A- 9 011 275
- JP-A- 58 096 533
- JP-A- 58 112 949
- JP-U- 3 114 093
- JP-U- 52 159 860
- US-A1- 2007 172 664

## Description

### TECHNICAL FIELD

The present invention relates to a resin-made container for housing foods, medicines, cosmetics and others, and to its production method. More concretely, the invention relates to a label-buried resin-made container which has an extremely improved appearance and is free from contamination of the contents to be held in the container, and in which the label and the resin are integrated, and relates to a simplified production method for it.

### BACKGROUND ART

Heretofore, an in-mold molding method has been known for producing a labeled resin shaped article according to an integral molding method. In the method, a label or a blank is previously fitted to the inner wall of a mold, then a molding resin such as polyethylene resin, polypropylene resin or the like is melted and directly fed into the mold, and the resin is shaped in the mold with simultaneously sticking the label to the molten resin (for example, see Patent Reference 1, Patent Reference 2). The label to be fitted to the mold is referred to as an in-mold label (IML).

DE 10 2005 035 899 A1 relates to the embedding of an in-mould-label between two components, each of which is produced by injection-molding.

EP 1 724 088 A1 relates to a user panel for domestic appliances having a transparent front layer, a support layer and a printed foil in between.

As the in-mold label, known are a gravure-printed resin film, an offset multicolor-printed synthetic paper sheet (for example, see Patent Reference 3, Patent Reference 4), and an aluminium label prepared by laminating a high-pressure-process low-density polyethylene, an ethylene/vinyl acetate copolymer or the like on the back of an aluminium foil followed by gravure-printing on the surface of the foil, etc.

The in-mold label of the type is, in general, fitted to and fixed on the inner wall of a female mold that forms the outer periphery of a molded article through suction or by static electricity, and then a molten resin is fed into the mold to form a molded article therein as integrated with the label, and therefore, the label is stuck to the outer periphery of the molded article.

For the purpose of further enhancing the design sense of the labeled molded article, various attempts have been made to arrange a label not inside but outside the molded article so that the label is visible through the transparent or nontransparent molded article.

For example, in Patent References 5 to 8, there is described a composite container having a two-layered structure of an inner container part and an outer container part in which a label (printed matter, decorative film) is put (sandwiched, arranged, buried) between the two parts. In the container, the label is visible through the transparent or semitransparent outer container part, and they say that the container can provide an outward appearance suitable to high-quality products.

However, in the proposed inventions, the label is not fused to the outer container part but is merely in contact with it, and therefore, the two are not integrated. The label contents could be visible from the outward appearance of the container, but there exists an air layer between the two, and therefore, there occurs light reflection or refraction individually on the respective interfaces of the inner surface of the container and the surface of the label. As a result, the decoration such as printing or the like made on the surface of the label is blurred by the scattering of light thereon, and there is a problem of poor integrality sense of the container and the label. For further enhancing the high-quality sense of the labeled container, it is desired that the outer container part and the label are fused together and are integrated. Further, owing to the production methods thereof, the inventions of Patent References 7 and 8 have a problem in that the label may be misaligned or dropped since the label may freely move until the inner container part is formed through blow molding or a parison and the label is fixed thereon, and therefore the product quality could not be stabilized.

Patent References 9 to 11 disclose a method of an invention of arranging a label inside a container and integrating them. These disclose an applied invention of an in-mold molding method comprising sticking a label to the inner side of a mold and integrating them in molding a molded article therein.

Patent Reference 9 describes a production method for a labeled container, comprising thermally shrinking a thermally-shrinkable label in accordance with the shape of a male mold and closing the mold with a female mold for injection molding therein. According to the method, there is obtained a container integrated with a label inside it with no misalignment; however, the method has a narrow latitude in choice of the label material, and owing to the production mode thereof, the method takes much time for arranging the label at a predetermined position of the male mold and thermally shrinking the label, and therefore, the shot cycle of the method for one container is extremely long and the producibility thereof is not good.

Above all, the problem with the container obtained in Patent Reference 9 is that the contents are kept in direct contact with the label, and are risky in safety. In consideration of the recent consumers' demand for product safety, the containers to contain substances such as foods, medicines, cosmetics and the like that are directly applied to humans must be such that the contents to be therein for a long period of time are in direct contact with the resin container body itself; and from this viewpoint, it is desirable that the label is arranged in the space of the two-layered wall of the container and is spaced from the contents, as in the embodiments in Patent References 5 to 8. In the embodiment in Patent Reference 9, even though the printed surface is not on the inner side of the container, the possibility that the printing ink would bleed out from the edge of the label could not be evaded. This is because the proposed invention could not control the design of the label. In addition, there may be further risks that the content ingredient (oil) may penetrate into the label to swell it to thereby worsen the outward appearance of the container, and the label itself may be peeled off to be in contact with the contents.

Patent Reference 10 describes a molding method for a cylindrical container, in which an in-mold label previously fixed on the outer wall of a mold is pressed into the inside of the injected resin injected owing to the flow of the resin, and finally the label is stuck to the inner peripheral surface of the molded container. According to the method, however, the problems are inevitable that the outward appearance of the products is worsened owing to the overflow of the injected resin to the surface and the back of the label and that the producibility is thereby lowered.

Patent Reference 11 describes a molding method for a cup-like container, in which a core mold with a label stuck to the outer peripheral surface thereof is inserted into the inside of a cup-like primary molded article, and the primary molded article is shrunk by heating so as to be in close contact with the core mold to thereby adhere the label to the inner peripheral surface of the container. However, the method takes much time for arranging the label at a predetermined position of the core mold and thermally shrinking the container, and therefore the shot cycle for molding one container is extremely long and the producibility is not good. Further, in Patent References 10 and 11, the contents are kept in direct contact with the label like in Patent Reference 9, the risks in safety could not be still solved.

The invention of arranging a label inside a container and integrating them, as described in Patent References 9 to 11, has poor producibility and is not realized as yet, and therefore, the composite container comprising a combination of these with Patent References 5 to 8 is not as yet realized. In particular, the method of separately preparing an inner container part and an outer container part and combining them, and the method comprising first preparing an outer container part followed by forming the corresponding inner container part through blow molding, as described in Patent References 5 to 8, still involve problems in that the label could not be integrated with the outer container part, the label could not be fixed surely at a predetermined position, and the methods could not evade a troublesome, time-consuming and unrealistic working step.

Apart from the above-mentioned technical field, Patent Reference 12 describes a production method for eating utensils, comprising a step injection-molding an inner part, a step of arranging a sheet resistant to heat and pressure of a molten resin material in injection-molding of an outer part to the back of the inner part, in the position corresponding to the injection part in the injection-molding of the outer part, by adhering thereto with an adhesive or concavely, and a step of injection-molding the outer part to the outer side of the sheet-fitted inner part.

However, in the invention of Patent Reference 12, both faces of the sheet to be inserted into the inside are not fused and integrated with the resin material of the inner part and the outer part, and therefore the invention involves the same problems as those in the invention of Patent References 5 to 8 in that the container lacks integrality sense with the label. From the spirit thereof, the invention in Patent Reference 12 is such that the sheet to be inserted into the inside may be arranged in the position corresponding to the injection port for injection-molding of the outer part; and from this viewpoint, the invention is insufficient as it could not bring about the result of improving of the appearance of products to the degree acceptable by the market.

Further, from the viewpoint of the production method, the invention requires a separate step of fitting a sheet to the back of the inner part after the inner part is once injection-molded, and is therefore complicated.

Patent Reference 13 describes a production method for a patterned molded article, in which a first transparent resin molded article having a pattern formed on one side thereof is arranged in the female mold part of an insert-molding mold so that the patterned side thereof can be kept in contact with the male mold part thereof, then the mold is closed, and thereafter a second transparent resin is injected into the space between the first transparent resin molded article and the male mold part of the mold thereby producing a molded article with the pattern sandwiched between the first transparent resin and the second transparent resin.

However, the invention of Patent Reference 13 naturally relates to a production method for patterned molded articles favorable for emblems for displaying the manufacturer's name, the trade name and the like for household electric appliances, automobiles, etc. In case where the invention is applied to a production method for label-buried containers, the process shall be as follows: First, an outer container part with a label arranged inside it is prepared as a molded article of a first transparent resin, and then a second transparent resin is injected into the inside of the first molded article serving as a part of a female mold so as to form an inner container part inside it, thereby producing a container with a pattern sandwiched between the first transparent resin and the second transparent resin.

In this, for preparing the first molded article with a label fitted to the inside thereof, it is inevitable to use the technique of the invention as described in Patent References 9 to 11, and it is extremely difficult to carry out it. Further, according to the production method where the outer container part is prepared and then the inner container part is injection-molded inside it, the label part in the interface to the outer container part may swell and there occurs a problem in that a container with a label integrated with the resin material thereof could not be obtained.

As in the above, a composite container, in which a label is arranged between an inner container part and an outer container part and the three are tightly integrated together with no space therebetween and which therefore has an improved appearance and high safety, is not as yet realized. In addition, a method for producing such a composite container with no label misalignment and with high producibility is not as yet realized.
Patent Reference 1: JP-A 58-069015
Patent Reference 2: JP-A 01-125225
Patent Reference 3: JP-A 02-007814
Patent Reference 4: JP-A 02-084319
Patent Reference 5: JP-A 08-301262
Patent Reference 6: JP-A 2006-062751
Patent Reference 7: JP-A 2000-142684
Patent Reference 8: JP-A 2001-287260
Patent Reference 9: JP-A 06-091692
Patent Reference 10: JP-A 11-245260
Patent Reference 11: JP-A 2006-096012
Patent Reference 12: JP-A 58-096533
Patent Reference 13: JP-A 09-011275

### DISCLOSURE OF THE INVENTION

### PROBLEMS THAT THE INVENTION IS TO SOLVE

The present invention has been made in consideration of the above-mentioned problems, and an object of the invention is to provide a composite container with a label buried in the resin material forming the container, in which the label is vividly seen from the outside or the inside of the container and which is free from a risk of safety to the contents to be put into the container. Another object of the invention is to provide a production method for producing the composite container not troubled by misalignment of the label therein, with ease and with good producibility.

### MEANS FOR SOLVING THE PROBLEMS

The invention is defined by the features of product claim 1 and by a method in accordance with claim 9.

The present inventors have assiduously studied for the purpose of solving the above-mentioned problems and, as a result, have found that, when an inner container part with a label fused thereto is first formed by injection-molding, and then an outer container part is formed by injection-molding so that the label can be buried in these, then a composite container with both faces of the label fused and integrated with the inner container part and the outer container part can be provided, and thus have completed the present invention described below. In the invention described below, the inner container part is expressed as one embodiment of the first resin material part and the outer container part is as one embodiment of the second resin material part. The following aspects are described:
[1] An injection-molded composite container composed of a first resin material part, a second resin material part and a label, wherein the label is buried between the first resin material part and the second resin material part, and both faces of the label are fused and integrated with the resin materials ("buried" means that the label is enveloped and held inside the resin materials and the label is not exposed out of the resin materials).
[2] The injection-molded composite container of [1], wherein the first resin material and the second resin material each are independently a resin composition comprising at least one thermoplastic resin selected from a group consisting of polyolefin resin, polyester resin, styrene resin, ethylene-vinyl acetate resin, polyamide, polycarbonate, polyvinyl chloride, polyoxymethylene, polymethyl methacrylate, polymethacrylstyrene, polyaryl sulfone and ionomer.
[3] The injection-molded composite container of [1] or [2], wherein the first resin material is a resin composition comprising at least one thermoplastic resin selected from a group consisting of high-density polyethylene, middle-density polyethylene, polypropylene, poly(4-methylpent-1-ene), polyethylene terephthalate, polybutylene terephthalate, polyethylene naphthalate, polybutylene succinate, polylactic acid, polystyrene, styrene-acrylonitrile resin, acrylonitrile-butadiene-styrene resin, ethylene-vinyl acetate resin, polyamide, polycarbonate, polyvinyl chloride, polyoxymethylene, polymethyl methacrylate, polymethacrylstyrene and polyaryl sulfone, and the second resin material is a resin composition comprising at least one thermoplastic resin selected from a group consisting of high-density polyethylene, middle-density polyethylene, polypropylene, poly(4-methylpent-1-ene), elastomer, ionomer, polyethylene terephthalate, polybutylene terephthalate, polyethylene naphthalate, polybutylene succinate, polylactic acid, amorphous polyethylene terephthalate, polystyrene, styrene-acrylonitrile resin, acrylonitrile-butadiene-styrene resin, ethylene-vinyl acetate resin, polyamide, polycarbonate, polyvinyl chloride, polyoxymethylene, polyvinyl alcohol, polybutene, polymethyl methacrylate, polymethacrylstyrene, polyarylate and polyaryl sulfone.
[4] The injection-molded composite container of any one of [1] to [3] composed of a first resin material part, a second resin material part and a label, wherein a resin composition comprising the same resin material is used for the first resin material and the second resin material. In particular, the injection-molded composite container is composed of a first resin material part formed by injection-molding and having a shape of a container having an engagement part with a cap, a second resin material part formed by injection-molding and positioned on the outside of the first resin material part, and a label, wherein a resin composition comprising the same resin material is used for the first resin material and the second resin material, the label is arranged along the side wall of the first resin material part, and is buried between the first resin material part and the second resin material part, and both faces of the label are fused and integrated with the resin materials.
[5] The injection-molded composite container of any one of [1] to [3] composed of a first resin material part, a second resin material part and a label, wherein the first resin material and the second resin material differ in the resin composition.
[6] The injection-molded composite container of any one of [1] to [5], wherein the first resin material part is formed by injection-molding and has a shape of a container having an engagement part with a cap.
[7] The injection-molded composite container of [6], wherein the second resin material part is positioned on the outside of the first resin material part ("outside" is meant to indicate the side remoter from the region of the composite container to hold contents therein).
[8] The injection-molded composite container of any one of [1] to [7], wherein the second resin material part also has a shape of a container.
[9] The injection-molded composite container of any one of [1] to [8], wherein at least one of the first resin material part and the second resin material part is transparent.
[10] The injection-molded composite container of any one of [1] to [9], wherein the substrate of the label is formed from a polyolefin film or a polyester film.
[11] The injection-molded composite container of [10], wherein the surface and the back of the substrate of the label is formed of a different material.
[12] The injection-molded composite container of any one of [6] to [11], wherein the label is arranged along the outer peripheral wall of the first resin material part having a shape of a container.
[13] The injection-molded composite container of any one of [1] to [12], wherein the label is decorated.
[14] The injection-molded composite container of [13], wherein the decoration is printed.
[15] The injection-molded composite container of [13] or [14], wherein the decoration is by metal foil.
[16] The injection-molded composite container of any one of [13] to [15], wherein the decoration of the label is visible through the resin material.
[17] The injection-molded composite container of [16], wherein the decoration of the label is arranged in the position visible from the inside of the container ("inside" is meant to indicate the region to hold contents in the composite container or the space to anticipate the region).
[18] The injection-molded composite container of any one of [1] to [17], wherein the label has a heat seal layer on both sides thereof.
[19] The injection-molded composite container of any one of [1] to [18], wherein the label has perforations.
[20] The injection-molded composite container of any one of [1] to [19], wherein the outer surface of the injection-molded composite container is decorated.
[21] A method for producing an injection-molded composite container composed of a first resin material part, a second resin material part and a label, comprising:
   (1) arranging and fixing a label onto the inner wall of the female mold part of a first mold, closing the mold, and thereafter injecting a first resin material into the first mold and molding it to form a label-fused first resin material part; and
   (2) closing the mold with a male mold or the first resin material part as a male mold and a second mold as a female mold so as to completely bury the label on the first resin material part, and injecting and molding a second resin material to form a second resin material part to cover the label on the first resin material part.
[22] The method for producing an injection-molded composite container of [21], wherein in (1), the first resin material part is molded into a shape of a container having an engagement part with a cap.
[23] The method for producing an injection-molded composite container of [21] or [22], wherein the second resin material part is formed on the outside of the first resin material part.
[24] The method for producing an injection-molded composite container of [22] or [23], wherein the second resin material part is also molded into a shape of a container.
[25] The method for producing an injection-molded composite container of any one of [21] to [24], wherein the first resin material and the second resin material differ in the resin composition.
[26] The method for producing an injection-molded composite container of any one of [21] to [24], wherein the first resin material and the second resin material are both a resin composition of the same resin material.
[27] The method for producing an injection-molded composite container of any one of [21] to [26], wherein the label is decorated, and the degree of opacity of the first resin material part and the second resin material part is so defined that the decoration is visible through the first resin material part, the second resin material or both the two.
[28] The method for producing an injection-molded composite container of any one of [21] to [27], wherein the label has a heat seal layer at least on one side thereof.

### ADVANTAGE OF THE INVENTION

In the composite container of the invention, the label buried in the resin material to form the container is vividly visible via the resin material, and therefore the outward appearance of the container is significantly improved. In addition, the label is not in direct contact with the contents of the container, the container is free from a risk of safety to the contents. The production method for the composite container of the invention exhibits a remarkable effect in that the composite container having the characteristics as above can be produced with ease, not troubled by label misalignment therein.

### BRIEF DESCRIPTION OF THE DRAWINGS

Fig. 1 is a schematic view showing one embodiment of an injection molding machine for producing the composite container of the invention.
Fig. 2 is a cross-sectional view showing one embodiment of the first resin material part (inner container part) for use in the composite container of the invention.
Fig. 3 is a cross-sectional view showing one embodiment of the composite container of the invention.

In the drawings, 1a is an injection molding machine for a first resin material part (inner container part), 1b is an injection molding machine for a second resin material part (outer container part), 2 is a robot for taking out an inner container part, 3 is a conveyor for transporting a composite container, 4 is a conveyor, 5 is a robot for inserting an inner container part and for taking out a composite container, 11 is the angular edge of the bottom of a first resin material part (inner container part), 12 is the shoulder of the first resin material part (inner container part), 20 is a composite container, 21 is the first resin material part (inner container part), 22 is a second resin material part (outer container part), 23 is a label.

### BEST MODE FOR CARRYING OUT THE INVENTION

The composite container and the production method for the composite container of the invention are described in detail hereinunder. The description of the constitutive elements of the invention given hereinunder may be for some typical embodiments of the invention, to which, however, the invention should not be limited.

In this description, the numerical range expressed by the wording "a number to another number" means the range that falls between the former number indicating the lowermost limit of the range and the latter number indicating the uppermost limit thereof.

### Resin Material

### (First Resin Material Part)

The first resin material part of the composite container of the invention is formed by injection-molding of a resin material, and constitutes a part of the resin material of the composite container. Preferably, the first resin material part has a shape of a container, more preferably has a structure to be the body of the composite container. Even more preferably, the first resin material part has a structure to be the inner container part of the composite container. The inner container part as referred to herein is a container that has at least a bottom and a side wall and is kept in contact with the contents held in the composite container. This may have various shapes such as a top-open cylinder, a cup, a bottle or the like, and its top may be formed to have an engagement part such as a screw (a thread) and engagement part for engaging with a cap. The thickness is not specifically defined, and the thickness may continuously change in the side wall part.

The first resin material part may be transparent, or may be semitransparent or nontransparent. For making the part semitransparent or nontransparent, a known filler may be used. The first resin material part may have a native color of itself or may be artificially colored. In case where the part is colored, any known colorant may be used. In case where the label that is buried in the composite container is desired to be visible from the inside of the composite container, a transparent or semitransparent resin material must be used for the first resin material part to be the inner container part. For example, when the outer container part is nontransparent and the inner container part is transparent, then the label is invisible via the outer container part but the print on the label is visible via the inner container part; and having the constitution, the decorative appeal and the design sense of the composite container may be thereby enhanced. Further, the composite container may be so designed that only when the cap is opened or only after the nontransparent contents of the container are consumed in some degree, then the information and the decoration inside the label can be visible; and for example, the security information for preventing deception and counterfeiting, as well as prizes, fortunes or the like may be written on the label. In case where the decoration on the label is desired to be visible from the outside of the composite container, then the first resin material part to be the inner container part is not always needed to be transparent or semitransparent but may be nontransparent.

As the resin material to form the first resin material part, usable is an injection-moldable thermoplastic resin of polyolefin resin such as high-density polyethylene, middle-density polyethylene, polypropylene, poly(4-methylpent-1-ene), etc.; polyester resin such as polyethylene terephthalate, polybutylene terephthalate, polyethylene naphthalate, polybutylene succinate, polylactic acid, etc.; styrene resin such as polystyrene, styrene-acrylonitrile resin, acrylonitrile-butadiene-styrene resin, etc.; ethylene-vinyl acetate resin, polyamide, polycarbonate, polyvinyl chloride, polyoxymethylene, polymethyl methacrylate, polymethacrylstyrene, polyaryl sulfone, etc. These resins may be not only homopolymers but also copolymers. The copolymers may be binary, ternary or more polynary copolymers, and may be random copolymers or block copolymers.

Of those, preferred are polyolefin resin and polyester resin from the viewpoint of workability and safety. Also from the viewpoint of workability and safety, polypropylene resin is more preferred as the polyolefin resin, and polyethylene terephthalate and its copolymer are more preferred as the polyester resin.

These resins may be processed for increasing the crystallinity thereof from the viewpoint of enhancing the heat resistance, the strength, the light reflectivity and other physical properties and the design sense of the container; and a resin composition prepared by adding known filler, colorant and additive may be added to the resin may be used here.

### (Second Resin Material Part)

The second resin material part of the composite container of the invention is formed by injection-molding of a resin material, and constitutes a part of the resin material of the composite container. Preferably, the second resin material part has a shape of a container, more preferably has a structure to be the outer container part of the composite container. The outer container part as referred to herein is a container that has at least a bottom and a side wall and is not kept in direct contact with the contents held in the composite container. In general, this is a container to constitute the outside of the composite container. The second resin material part may have various shapes such as a top-open cylinder, a cup, a bottle or the like, and may have a totally or partly similar shape to that of the first resin material part.

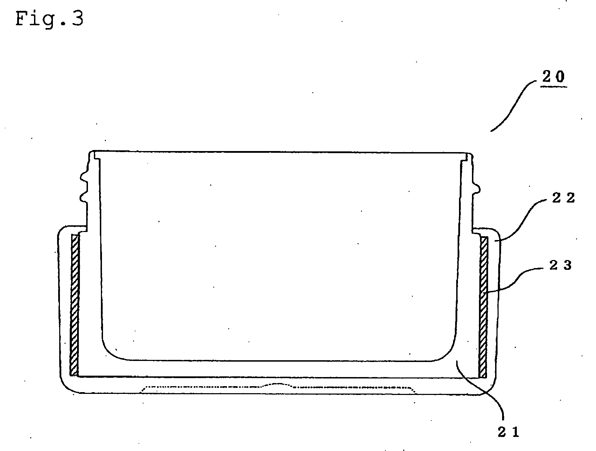

For example, the second resin material part may have a structure fused and integrated with the first resin material part from the lower edge of the engagement part thereof to the side wall (label part) and the bottom thereof. Preferably, the top of the second resin material part is formed to have a folded part as folded toward the inside so as to step in and fix at the lower edge of the engagement part of the first resin material part thereby to be integrated with the first resin material part, as shown in Fig. 3. The thickness of the second resin material part is not specifically defined, and the thickness may continuously change in the side wall part.

As the resin material to constitute the second resin material part, mentioned is an injection-moldable thermoplastic resin of polyolefin resin such as high-density polyethylene, middle-density polyethylene, polypropylene, poly(4-methylpent-1-ene), polyolefin elastomer, polyolefin ionomer, ethylene-vinyl acetate resin, etc.; polyester resin such as polyethylene terephthalate, polybutylene terephthalate, polyethylene naphthalate, polybutylene succinate, polylactic acid, amorphous PET, polyester elastomer, etc.; styrene resin such as polystyrene, styrene-acrylonitrile resin, acrylonitrile-butadiene-styrene resin, styrene-butadiene elastomer, styrene ionomer, etc.; polyamide, polycarbonate, polyvinyl chloride, polyvinyl alcohol, polybutene, polyoxymethylene; (meth)acrylic resin such as polymethyl methacrylate, polymethacrylstyrene, etc.; polyarylate, polyaryl sulfone, urethane elastomer, urethane ionomer, etc. Also usable are so-called green plastics such as bioplastics, biodegradable resins, etc.

These resins may be not only homopolymers but also copolymers. The copolymers may be binary, ternary or more polynary copolymers, and may be random copolymers or block copolymers.

The resin material for the second resin material part may be the same as the resin material for the first resin material part or may differ from the latter. The resin material for the second resin material part may be in the same series as that for the resin material for the first resin material part, or may be in a different series from the latter.

Using resins in the same series is preferred as securing firm fusion between the first resin material part and the second resin material part and as facilitating the recycling after use of the container. For example, any of a polyolefin resin composition or a polyester resin composition is preferred for both the first resin material part and the second resin material part. Above all, especially preferred is a combination of, for example, using a polypropylene resin composition for the first resin material part and a polyolefin resin selected from a group consisting of polyethylene resin, polypropylene resin, polyolefin elastomer resin and polyolefin ionomer resin, from the viewpoint of the adhesiveness between the two. More preferred is using the same resin for both the first resin material part and the second resin material part from the viewpoint of the adhesiveness between the two. For example, both the first resin material part and the second resin material part are preferably formed of a polypropylene resin composition or a polyethylene terephthalate resin composition from the viewpoint of the shrinkage of the two. Even though the same resin is used for the first resin material part and the second resin material part, the first resin material part and the second resin material part may be made to differ from each other in the color thereof by adding a different dye or colorant to the two.

On the other hand, in case where the resin material for the first resin material part is made to differ from the resin material for the second resin material part, a composite container can be realized in which the functions and the characteristics of the respective resins are combined. The combination may solve the problem of the quality inherent to conventional containers and may facilitate container planning in accordance with the use of containers. In addition, in case where the resin material for the first resin material part is made to differ from the resin material for the second resin material part, a heterogeneous sense may be produced between the first resin material part and the second resin material part to thereby make the label highly visible or enhance the design sensuousness of the container. This embodiment is especially useful for containers for cosmetics, and the industrial applicability thereof is great.

In case where the resin material for the first resin material part and that for the second resin material part are in different series, for example, a resin composition selected from a group consisting of a polyolefin resin composition and a polyoxyalkylene resin composition may be used for the resin material for the first resin material part, and a resin composition selected from a group consisting of a polyester resin composition, a polystyrene resin composition, a polycarbonate resin composition, a (meth)acrylic resin composition, an ionomer resin composition and an elastomer resin composition may be used for the resin material for the second resin material part; and especially mentioned is a combination of using a resin composition selected from a group consisting of a polyolefin resin composition and a polyoxyalkylene resin composition for the resin material for the first resin material part and using a resin composition selected from a group consisting of a polyester resin composition, a polycarbonate resin composition, an ionomer resin composition and an elastomer resin composition for the resin material for the second resin material part.

Some preferred examples of the embodiment where the resin material for the first resin material part differs from the resin material for the second resin material part are mentioned below. For example, for the first resin material part to be the inner container part, selectively used is polypropylene, polyoxymethylene or the like, excellent in resistance to contents (oil resistance, alcohol resistance, chemical resistance, etc.), and for the second resin material part to be the outer container part, selectively used is polyethylene terephthalate or ionomer having high transparency and excellent in secondary decorative workability, or polycarbonate excellent in light resistance and weather resistance, or elastomer, ionomer or the like, excellent in dropping shock resistance and scratch resistance. In case where the inner container part is formed to have an engagement part (screw part) with a cap, polypropylene or the like excellent in lubricity (with no friction to cap), may be selectively used for the first resin material part to be the engagement part-having inner container part, and elastomer or the like having no lubricity and well-fittable to hand may be selectively used for the second resin material part to be the outer container part. As another combination of highly transparent resins, polyethylene terephthalate or the like that is hard and has good gas-barrier property may be selectively used for the first resin material part to be the inner container part, and ionomer or the like that is elastic and can be readily worked for secondary decoration may be selected for the second resin material part to be the outer container part. Employing the combinations exemplified herein brings about additional advantages of enhancing the label integrality, stability and visibility in injection-molded composite containers, in addition to the additive effect resulting from the combination of the characteristics of the two resins.

The label that mediates the first resin material part and the second resin material part is specifically so designed that a heat seal layer is formed on both sides thereof.

In case where the label buried in the composite container is desired to be visible from the outside of the composite container, a transparent or semitransparent resin material must be used for the second resin material part to be the outer container part. However, in case where the decoration on the label is made visible from the inside of the composite container, the second resin material part to be the outer container part may not always be transparent or semitransparent, but a nontransparent resin material may be used for it, or the part may be made nontransparent through spray coating or metal vapor deposition. The second resin material part may be also colored with an existing colorant. Known filler, colorant and additive may be added thereto. Like the first resin material part, this may also be processed for increasing the crystallinity thereof.

The outer surface of the second resin material part may have a smooth mirror-finished face to be glossy, or may be roughened and frosted to have a pearskin-finished face or the like, or may be embossed to have a patterned indented face. Preferably, it is a smooth surface. As the case may be, only the outer surface may be processed for increasing the crystallinity thereof.

In case where the surface is smooth, the container may have a further enhanced high quality owing to the surface glossiness thereof. In addition, when the surface is smooth, an additional decoration different from the label may be made with ease on the outer surface of the second resin material part. The decoration includes label adhesion, in-mold label arrangement, stretch label arrangement, shrink label arrangement, direct printing, painting, metal foil transfer, metal vapor deposition, surface roughening, embossing, etc. In case where the surface is smooth, decoration (secondary decoration) may be made thereon with ease, including label adhesion, in-mold label arrangement, stretch label or shrink label arrangement, direct printing such as silk printing, painting by spraying or the like, metal foil transfer by hot stamping or the like, metal vapor deposition, etc.

In case where the surface has a pearskin-finished face, gradational expression may be intentionally given thereto. In case where the surface is embossed, the convexoconcaves may serve as lenses, and when combined with the decoration of the label inside the container, they provide additional effects of stereoscopic sense and hologram.

A label different from the label buried in the composite container may be fused to the outer surface of the second resin material part. In this case, the buried label may have a scenic picture and the outer label may have a decoration of window frame or picture frame, whereby the composite container may produce a realistic sense or a stereoscopic sense owing to the overlapping of the picture patterns. However, since the first resin material part and the second resin material part are integrated, a visual effect such as moire effect through deformation of the outer container part (second resin material part), for example, as in JP-A 2006-143270 could not be expected.

The composite container of the invention may further have a third resin material part. Specifically, in the composite container, a third resin material part may be formed on the surface of the first resin material part, or on the surface of the second resin material part, or on both the two surfaces. In this case, the label fused to the surface of the second resin material part may be buried in and integrated with the third resin material part. Still another label may be fused to the surface of the third resin material part.

### Label

### (Visibility of Label)

The label to constitute the composite container of the invention is completely buried between the first resin material part and the second resin material part and integrally fused to the two. Preferably, the label is integrally fused to the outer periphery of the first resin material part to constitute the inner container part and to the inner periphery of the second resin material part to constitute the outer container part. The label is visible through a transparent or semitransparent resin material. In the invention, preferably, the label is visible from the outside of the container through the transparent or semitransparent outer container part (second resin material part), but may be visible from the inside of the container through the transparent or semitransparent inner container part (first resin material part). Further, the embodiments may be combined. The decorated face of the label shares the interface thereof with that of the inner peripheral face of the outer container part (second resin material part) as well as the outer peripheral face of the inner container part (first resin material part), and therefore the composite container may have a further enhanced high quality sense as the gloss or the like of the container may directly reflect on the decoration of the label.

Since the label is buried between the first resin material part and the second resin material part, it is not in direct contact with the contents of the container. Therefore, there is no risk of detracting from safety and sanitation by contamination of the contents with the printing ink or the like of the label.

### (Substrate of Label)

The substrate is a support of the label to impart strength and printability to the label and, as the case may be, opacity or the like thereto. In forming the label, the substrate supports the heat seal layer thereof to facilitate the formation, and advantageously functions from the viewpoint of material recycling.

In the invention, various substances and materials such as typically resin film, aluminium label, pulp-made natural paper and the like may be used for the substrate of the label. Above all, a resin film is preferred for the label substrate, since a transparent or nontransparent resin film may be freely selected for it. More preferred is use of a resin film formed of a resin material in the same series as that of the material of the container, since the adhesiveness of the resin film to the container is good and since recycling the container is easy.

The resin film for the substrate contains a thermoplastic resin. The thermoplastic resin is a film-formable thermoplastic resin including polyolefin resin such as polypropylene resin, polyethylene resin (e.g. high-density polyethylene, middle-density polyethylene, low-density polyethylene, etc.), polymethyl-1-pentene, ethylene-cyclic olefin copolymer, etc.; polyamide resin such as nylon-6, nylon-6,6, nylon-6,10, nylon-6, 12, etc.; polyester resin such as polyethylene terephthalate and its copolymer, polybutylene terephthalate, polyethylene naphthalate, polylactic acid, aliphatic polyester, etc.; polycarbonate, isotactic polystyrene, syndiotactic polystyrene, polyphenylene sulfide, etc. Two or more of these may be combined for use herein.

Of those, preferred are polyolefin resin and polyester resin. As the polyolefin resin, more preferred is polypropylene resin; and as the polyester resin, more preferred are polyethylene terephthalate and its copolymer.

The polypropylene resin is preferably an isotactic polymer or a syndiotactic polymer prepared through homopolymerization of propylene. Also usable are propylene-based copolymers of various stereospecificity, prepared through copolymerization of propylene with an α-olefin such as ethylene, 1-butene, 1-hexene, 1-heptene, 4-methyl-1-pentene, etc. The copolymers may be binary, ternary or more polynary copolymers, and may be random copolymers or block copolymers.

As the polyethylene terephthalate and its copolymer, preferred are a copolymer comprising a diol of essentially ethylene glycol and a dicarboxylic acid of essentially terephthalic acid, and a copolymer comprising these materials and a hydroxycarboxylic acid copolymerizable with them. These may be binary, ternary or more polynary copolymers.

The label for use in the invention may be transparent or semitransparent, or may be nontransparent. In case where a resin film or the like is used as the substrate and when it is made semitransparent or nontransparent, an inorganic fine powder and/or an organic filler may be added to the resin film as a filler, or a resin film containing an inorganic fine powder and/or an organic filler may be stretched to be a porous stretched resin film having a large number of fine pores formed therein with the filler serving as nuclei, or a masking layer may be formed by printing or coating thereon to control the light transmittance of the film, or these methods may be combined.

"Transparent" as referred to herein means that the degree of opacity of the label is from 0 to 20%; "semitransparent" means that the degree of opacity is from more than 20% to 80%; and "nontransparent" means that the degree of opacity is from more than 80% to 100%. The degree of opacity is determined according to JIS P-8149:2000, in which a label test piece is lined with a standard black plate and its luminous reflectance is measured, while the same test piece is lined with a standard white plate and its intrinsic luminous reflectance is measured, and the former is divided by the latter and the resulting value is represented as a percentage.

The type of the inorganic fine powder for use in the resin film is not specifically defined. The inorganic fine powder includes, for example, heavy calcium carbonate, light calcium carbonate, fired clay, talc, barium sulfate, diatomaceous earth, magnesium oxide, zinc oxide, titanium oxide, silicon oxide, silica, alumina, etc. These may be surface-treated with a fatty acid or the like. Above all, preferred are heavy calcium carbonate, fired clay and talc, as inexpensive and capable of securing good moldability.

The inorganic fine powder may have a mean particle size of generally from 0.01 to 15 µm, preferably from 0.02 to 8 µm, more preferably from 0.03 to 4 µm, from the viewpoint of stable resin kneading, film stretching and uniform pore formation.

The type of the organic filler for use in the resin film is not specifically defined. As the organic filler, preferably selected is a resin that differs from the thermoplastic resin of the main ingredient of the resin film. For example, in case where the matrix resin is a polyolefin resin, preferred for the organic filler are those immiscible with the polyolefin resin and having a melting point of from 120°C to 300°C or a glass transition temperature of from 120°C to 280°C, for example, polyethylene terephthalate, polybutylene terephthalate, polyethylene naphthalate, polystyrene, polycarbonate, polyamide, polyethylene sulfide, polyphenylene sulfide, polymethyl methacrylate, melamine resin, polyimide, polymethyl ether ketone, polyether ether ketone, poly(4-methyl-pent-1-ene), homopolymer of cyclic olefin, copolymer of cyclic olefin with ethylene, etc.

Like the inorganic fine powder, the organic filler may have a mean particle size, after dispersed, of generally from 0.01 to 15 µm, preferably from 0.02 to 8 µm, more preferably from 0.03 to 4 µm.

One type may be selected from the above-mentioned inorganic fine powder and/or organic filler, and may be used singly, or two or more may be selected from them and may be used as combined. In case where the resin film is desired to be semitransparent or nontransparent, the content of the inorganic fine powder and/or the organic filler in the resin film is preferably from 0.5 to 65% by weight, more preferably from 3 to 50% by weight.

Further if desired, the resin film may contain a thermal stabilizer, a light stabilizer, an antioxidant, a dispersant, a lubricant, a fluorescent brightening agent, a colorant, etc.

The resin film to constitute the substrate may be an unstretched or stretched one. From the viewpoint of the curved surface followability thereof in injection-molding, the film may be an unstretched one; but from the viewpoint of weight reduction through pore formation or rigidity increase through molecular orientation or thickness reduction or enhancement of thickness uniformity thereof, the film is preferably stretched at least in one direction. Also preferably, the substrate is composed of plural layers, in which the surface and the back are composed of a different material. The substrate of which the surface layer and the back layer differ from each other makes it possible to produce a label comprising a surface layer that is easy to decorate and a back layer that serves as a heat seal layer to be mentioned below. In case where the substrate is composed of plural layers, at least one layer is preferably stretched. In case where the plural layers are stretched, they may be individually stretched before being laminated, or after laminated, they may be stretched. The stretched layer may be again stretched after laminated with no problem. After a heat seal layer is formed on the substrate, it may be stretched as a whole.

For stretching the resin film to constitute the substrate, various conventional known methods may be employed. For example, there may be mentioned a roll-to-roll longitudinal stretching method comprising sheetwise extruding a molten resin through a T-die or an I-die connected to a screw-type extruder, and stretching the sheet based on the peripheral speed difference between rolls; a lateral stretching method of stretching a film by the use of a tenter oven; a simultaneous biaxial stretching method of stretching a film by a combination of a tenter oven and a linear motor; a simultaneous biaxial stretching method of stretching a film by a combination of a tenter oven and a pantograph-type stretcher; a simultaneous biaxial stretching method comprising cutting a film into a sheet and stretching it by the use of a pantograph-type stretcher; a simultaneous biaxial stretching (inflation forming) method comprising tubewise extruding a molten resin through a circular die connected to a screw-type extruder, followed by blowing air thereinto and stretching it, etc.

In case where the thermoplastic resin for the film is an amorphous resin, the stretching temperature may be not lower than the glass transition temperature of the resin; and in case where it is a crystalline resin, the temperature may be from the glass transition point of the amorphous part to the melting point of the crystalline part. Concretely, the temperature is lower by from 2 to 60°C than the melting point of the thermoplastic resin for the film; and for example, the resin is a propylene homopolymer (melting point, 155 to 167°C), the temperature is preferably from 152 to 164°C, and when it is a high-density polyethylene (melting point, 121 to 134°C), the temperature is preferably from 110 to 120°C. The stretching speed is preferably from 20 to 350 m/min. The stretching speed falling within the range is favorable since the resin film production is stable.

### (Heat Seal Layer)

The label for use in the invention has a heat both sides seal layer on both sides thereof, for which a layer of a heat sealant (generally a heat seal resin) may be provided as the outermost layer of the label. In the invention, the heat seal layer is for promoting the adhesion between the label and the container, and it is solid at room temperature but may be activated by the heat of the molten resin in molding the first resin material part and the second resin material part in a mold, and may fuse with the molten resin, and after cooled, it again solidifies to exhibit a strong adhesion power.

In the label for use in the invention, the heat seal layer is laminated on the substrate to be a part of the label. More concretely, the layer is formed on one side of the substrate by coating, or is formed thereon by melt lamination, or in case where the substrate is a resin film, the layer may be formed through co-extrusion along with the film substrate in the substrate production process.

As a concrete example of production of a label including the formation of a heat seal layer thereon, there is mentioned a method comprising applying a heat sealant to one side of a substrate such as a film, through extrusion lamination thereon or the like, or co-extruding a heat seal layer integrally with the film substrate during formation thereof for lamination to thereby provide a heat seal layer on the film, and then applying a decoration to the other side of the substrate through offset printing or the like. According to the method, one side of the substrate may have a decoration. In case where different decorations are desired to be made on both sides of the label, both sides of the substrate are individually decorated by offset printing or the like, and then a heat sealant may be applied thereto by coating, extrusion lamination or the like to thereby form a heat seal layer thereon.

The thermoplastic resin material for use in forming the heat seal layer may be any one having the function of adhering the label to the resin material part by heating in forming the container by injection molding, and the type thereof is not specifically defined.

The thermoplastic resin to constitute the heat seal layer in the invention preferably has a melting point of from 60 to 130°C, determined as the peak temperature in DSC. When the melting point is lower than 60°C, then the lubricity of the label may be poor owing to the stickiness of the layer at room temperature, and the label may often have a problem with blocking. If so, there may frequently occur a problem with multiple feeding or the like in inserting the label into a mold. On the other hand, when the melting point is higher than 130°C, then it is unfavorable since the adhesiveness of the label to the molded article may be poor.

Concrete examples of the thermoplastic resin are polyolefin resins, for example, polymethylene resins having a melting point of from 60 to 130°C, such as low-density to middle-density high-pressure-process polyethylene, linear polyethylene, ethylene/α-olefin copolymer, propylene/α-olefin copolymer, ethylene/vinyl acetate copolymer, ethylene/acrylic acid copolymer, ethylene/alkyl acrylate copolymer, ethylene/alkyl methacrylate copolymer (in which the alkyl group has from 1 to 8 carbon atoms), ethylene/methacrylic acid copolymer and their metal salts (e. g. , Zn, Al, Li, K, Na). One or more of these resins may be used herein either singly or as combined.

Any other additive to resin may be optionally added to the heat seal layer within a range not detracting from the necessary properties of the heat seal layer. The additive includes dye, nucleating agent, plasticizing agent, release agent, antioxidant, antiblocking agent, flame retardant, UV absorbent, dispersant, etc.

Preferably, the surface of the heat seal layer has irregularities of from 1 to 10 µm, as the three-dimensional center-line mean roughness (SRa) based on JIS-B-0601:2001, for the purpose of preventing blistering (swelling) to be caused by air engulfment between the label and the first resin material part in in-mold molding, more preferably from 2 to 8 µm. For imparting such irregularities thereto, if desired, the heat seal layer may be processed for embossing thereon. The embossing may be attained by pressing an embossing roll or the like to the heat seal layer to thereby transfer the roll pattern onto the layer during or after the formation of the heat seal layer. When the irregularities are smaller than 1 µm, they are unfavorable since air may be trapped between the molded article and the label during injection molding to thereby cause the outward failure of blistering. On the other hand, when the irregularities are larger than 10 µm, they are also unfavorable since the irregularity pattern may appear through the outer surface of the decoration label thereby often causing printing unevenness in printing or transfer unevenness in metal foil transferring. Examples of the embossing profile include a regular concavo-convex pattern comprising projections derived from quadrilateral pyramids by cutting the head thereof (head-cut pyramids) or semispherical projections as aligned at regular intervals, and a pearskin finish pattern.

### (Decoration)

The label for use in the invention may have a decoration by printing, metal foil transferring or the like on the outermost layer thereof. In this case, at least one side of the label is a decorative face, or both sides thereof are a decorative face. Preferably in the invention, the decoration on the label is adhered to and integrated with the container and is visible through the container.

The label for use in the invention may have various decorations printed thereon, informations of product name, brand name, manufacturer name, seller name, usage directions, usage warnings, contact name, bar code, two-dimensional bar code, etc.; and designs such as corporate mark, service mark, logo, character, product design, pattern, etc. Various printing methods are employable, such as sheet-fed offset printing, rotary offset printing, gravure printing, flexographic printing, letter press printing, screen printing, etc. Because of the vividness of the printed matter and the low production cost, sheet-fed offset printing and gravure printing are often employed.

The printing ink includes oily offset ink, UV-curable offset ink, gravure ink, water-based flexographic ink, UV flexographic ink, oily screen ink, UV screen ink, etc. These inks contain various types of dyes and pigments, for which, for example, usable are dyes such as basic dyes, acidic dyes, direct dyes, fluorescent dyes, disperse dyes, reactive dyes, etc; and for example, inorganic pigments comprising a metal oxide or sulfide as the main ingredient thereof, and insoluble organic pigments prepared by adding a precipitant to a soluble dye generally referred to as a lake are widely used. In the composite container produced according to the invention, the label is not in direct contact with the contents of the container, and therefore, the ink does not leak at all from the label into the contents. Accordingly, it is unnecessary to specifically consider the safety of ink, and printing ink in a broad range may be selected and used.

Concretely, inorganic pigments usable herein include titanium white (titanium dioxide), zinc flower (zinc oxide), calcium carbonate, kaolin, graphite (carbon black), ultramarine (ultramarine blue), dark blue (Prussian blue), Chinese yellow (yellow ocher), wulfenite yellow (chrome yellow), zinc chromate (zinc yellow), nickel titanium yellow, bismuth vanadium yellow, cadmium yellow, Bengal red (iron oxide), red lead, cinnabar (mercury sulfide), cadmium red, precipitated barium sulfate, baryta powder, etc. Organic pigments include lake pigments as well as polycyclic pigments, phthalocyanine pigments, soluble azo pigments, insoluble azo pigments, polyazo pigments, underglazing pigments, etc.

Pigments include process four-color pigments, white pigments, specific pigments, body pigments, as well as pearl pigments (talc particles, kaolin particles, mica particles, tabular silica, tabular alumina, tabular calcium carbonate and the like surface-processed with inorganic salt such as silicon oxide, titanium oxide, iron oxide, etc.), metal powders (e.g., bronze powders, bronze pastes, leafing type aluminium pastes, non-leafing type aluminium pastes), etc. These may be combined and used.

Apart from the above-mentioned printing methods, the ink pattern may be formed by coating. The ink coating method may be an ordinary coating method of roll coating, gravure coating, curtain coating, spray coating, die coating, etc.

Other decorations may be formed on the label for use in the invention for further enhancing the design sense thereof, for example, according to metal foil transfer by hot stamping or cold stamping, or metal direct vapor deposition, metal transfer vapor deposition, formation of interference pattern on photosensitive resin through photoexposure and development (holography) or the like. These decorations may be combined.

### (Perforations)

The label for use in the invention may have perforations. The label with perforations is a more preferred embodiment, in which a molten resin could run through the perforations in adhering the label through fusion to the first resin material part and the second resin material part to thereby enhance the adhesiveness by physical engagement and facilitate the integration.

For forming the perforation structure running through the label, employable is at least one perforation method selected from a mechanical perforation method using diamond grains-fitted roller, hot needles or cutting blade, a laser light irradiation perforation method, an electron beam irradiation perforation method, a plasma perforation method, and a high-pressure discharge perforation method; and from these, a suitable method may be selected in accordance with the material of the label, the thickness thereof, the running speed thereof, and the perforation diameter.

The perforations to be formed in the label are distributed at a pitch between the adjacent perforations of preferably from 3 to 30 mm, more preferably from 4 to 20 mm, even more preferably from 5 to 15 mm. In case where the pitch is less than 3 mm, it is unfavorable from the viewpoint of the appearance of the decoration since the perforations are visible. When more than 30 mm, the effect of enhancing the adhesiveness through engagement could not reach the desired level. Preferably, the perforations are distributed uniformly in the label from the viewpoint of attaining uniform adhesion.

The perforations to be formed in the label preferably have a pore size of from 0.05 to 2 mm, more preferably from 0.1 to 1 mm, even more preferably from 0.2 to 0.8 mm. The pore size means the diameter thereof when its cross section is circular, or means the major axis length (longest diameter) in the other cases. In case where the perforation diameter is less than 0. 05 mm, molten resin could not run through the perforations and the perforations could not therefore attain the intended effect. When more than 2 mm, then the perforations are visible and are therefore unfavorable from the viewpoint of the decoration appearance.

In case where the label for use in the invention has a resin film as the substrate thereof, the periphery of the perforation may undergo thermal deformation or plastic deformation through the perforating treatment and, after the perforating treatment, the periphery may be turned up inside out in the thickness direction of the film thereby forming projections (swollen sites, burrs) having a thickness larger than the original thickness of the film; and this is acceptable in the invention.

The projections may serve as anchors protruding toward the container when the label is integrated with the first resin material part or the second resin material part through injection-molding, thereby forming a configuration of engagement in the interface of container/label and further contributing toward enhancing the adhesiveness.

### (Shape of Label)

The label for use in the invention is produced by processing the above-mentioned label substrate in a step of decorating it, forming a heat seal layer thereon and perforating it, and thereafter blanking the thus-processed substrate in accordance with the size and the shape of the composite container to which the label is applied; and the label is used in composite container production.

The label for use in the invention may be integrated with the outer peripheral wall of the first resin material part or may be integrated with the bottom thereof, or may be a combination of these. When the label is integrated not only with the outer peripheral wall of the container but also with the bottom thereof, the label may mediate almost all the joint area between the first resin material part and the second resin material part, and even when the two parts are formed of a different resin composition, the bonding force between the two may be enhanced and the two may be readily integrated; and in addition, the label may be so specifically designed as to enhance the light shieldability and the gas barrier property of the container.

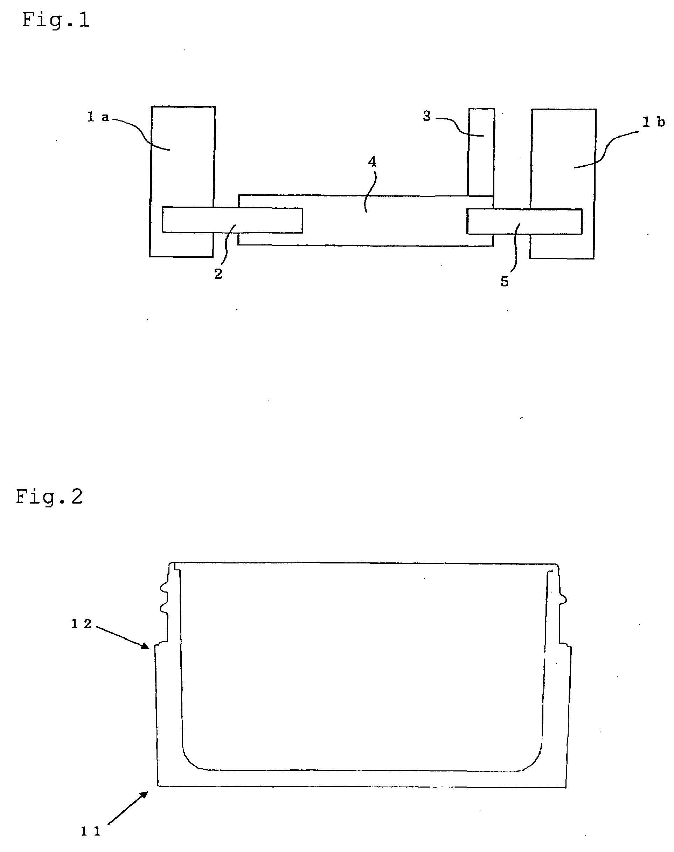

Regarding the shape of the label, a rectangular, trapezoidal or fan-like label may be applied to the side wall of the container, and a circular, doughnut-like or polygonal including cubic label may be applied to the bottom thereof, depending on the shape of the first resin material part. For example, as in the plan view (developed view) of the blank shown in Fig. 1 in JP-UM-A01-055970 or Fig. 2 and Fig. 3 in JP-A 07-232723, the label for the side wall part and the bottom may be integrated. According to the configuration of the composite container of the invention, the label and the contents are not in direct contact with each other, and therefore, the label may have any shape not causing ink leakage from the edge of the label.

### Relationship between Resin Material and Label

### (Combination)

In case where the first resin material part to be the inner container part and the second resin material part to be the outer container part are both transparent or semitransparent and the label is transparent or semitransparent, the contents and the content amount can be confirmed through the composite container.

In case where the outer container part and the inner container part are transparent or semitransparent and the label is nontransparent, the label is visible through the inside and the outside of the composite container, and therefore, for example, different decorations may be made on the surface and the back of the label.

In case where the inner container part is nontransparent and the outer container part and the label are transparent or semitransparent, the base texture of the inner container part is visible from the outside of the container, and therefore, a label information may be further imparted to the container having a sense of color depth like in Japanese Utility Model Registration 3114093.

In case where the outer container part is transparent or semitransparent and the inner container part and the label are nontransparent, the information of the decoration of the label is more vividly visible than in conventional composite containers. In the composite container of the invention, the inner container part, the outer container part and the label are integrated, and no air layer exist between the inner container part or the outer container part and the label, and therefore, light reflection or diffraction on the interface can be inhibited. As a result, the decoration such as the print or the like made on the label surface is not blurred by diffusion of light and is vividly visible.

The thickness of the outer container part and the inner container part between which the label is sandwiched may be suitably determined in accordance with the use of the container, irrespective of the transparent or semitransparent or nontransparent condition of the two. For example, in case where a transparent or semitransparent color resin is used as the material for the composite container, the thickness of the side wall of the inner container part may be made to differ from that of the outer container part whereby the composite container of the invention can realize a stereoscopic gradation.

### (Fusion an Integration)

The production method of the invention is characterized in that the label is buried between the first resin material part and the second resin material part and both faces of the label are fused and integrated with the resin material. "Fusion" in the invention means that the parts each constituting the two faces to be bonded to each other are melted and diffused by heating, and by cooling these while the two faces are kept in contact with each other, the two faces bond together. "Integration" in the invention means that plural parts are airtightly adhered and bonded to each other with neither swelling nor air retention between the bonding faces of the plural parts.

### Method for Producing Composite Container

### (Description of Production Method)

The method for producing the composite container of the invention is not specifically defined so far as it can provide the composite container as set forth in the claims. A preferred production method comprises forming a labeled first resin material part by injection molding, and then forming a second resin material part by injection molding so as to bury the label. An especially preferred production method is the production method of the invention that includes the following two steps:
(1) a step of arranging and fixing a label onto the inner wall of the female mold part of a first mold, closing the mold, and thereafter injecting a first resin material into the first mold and molding it to form a label-fused first resin material part; and
(2) a step of closing the mold with a male mold or the first resin material part as a male mold and a second mold as a female mold so as to completely bury the label on the first resin material part, and injecting and molding a second resin material to form a second resin material part to cover the label on the first resin material part.

In the step (1), a label is arranged and fixed on the inner wall of the female mold part of a first mold. The first mold has a cavity structure in accordance with the shape of the first resin material part to be formed. The label is arranged and fixed in the place corresponding to the site of the first resin material part to which the label is to be stuck by fusion. In this stage, the label is fixed on the inner wall of the mold according to a well-known method through suction or by static electricity. More concretely, the first mold is composed of a female mold part and a male mold part. Specifically, a label is fixed on the inner wall of the female mold part, and the mold is closed with the male mold part.

Next, a first resin material is injected into the first mold with the label fixed to the inner wall of the female mold side and molded. The injection and molding may be attained by suitably selecting and optionally combining the methods generally employed in an ordinary injection-molding technique. As a result of the step (1), a first resin material part having a desired shape and having a label fused to the desired position thereof can be produced. Preferably, the first resin material part is molded to have a shape of a container, more preferably it is molded to constitute the main container part of the composite container to be produced. The label may be fused to any desired part in accordance with the object and the use, as so mentioned in the above. For example, the label may be fused to the side wall and/or the bottom of the first resin material part having a shape of container. In this stage, plural labels may be fused thereto at the same time, or only one label may be fused.

The inner wall of the female mold part to which a label is fixed in injection molding is preferably curved or folded for more effectively enjoying the advantage of the invention, more preferably curved. In other words, the inner wall of the female mold part to which a label is fixed preferably includes a curved face or a valley line, more preferably a curved face. In case where the inner wall of the female mold part to which a label is fixed includes a curved face, the inner wall may be curved at a constant curvature in whole, or the curvature may continuously change. A part of the inner wall of the female mold part may be curved and the other part thereof may be flat. In case where the inner wall of the female mold part to which a label is fixed includes a valley line, a flat face may be adjacent to the valley line, or a curved face may be thereto. The inner wall may have a plurality of such valley lines.

Injection-molding into the first mold may give a first resin material part that comprises a side wall having, for example, a circular or oval cross section, and a bottom, in which a label is fused to the outside of the side wall (fused to the outer peripheral wall) thereof. Also given is a first resin material part in which the side wall comprises a part with a curvature and a part with no curvature, and a label is fused to the part with a curvature. Further given is a first resin material part comprising a side wall and a bottom in which the side wall comprises plural mountain lines and the same number as that of those lines of flat side plates and has a polygonal cross section and in which a label is fused to the side wall so as to cover at least one mountain line. In these embodiments, a label may be formed in the part not having a curvature or in the part not including a valley line. A label may surround the full circle of the side wall to be a surrounding label, and this embodiment is also preferred in the invention.

As the apparatus for forming the first resin material part, employable is a combination of an injection device and a mold-clamping device heretofore known in the art, optionally combined with a label inserter and a container take-out robot. Label insertion into the mold and taking out of the formed first resin material part out of the mold may be continuously attained by robots, or may be attained by hand in every one shot. In forming the first resin material part, the label is arranged and fixed to a desired position on the inner wall of a mold, but in case where a suction hole for suction fixation is not desired to be formed in the mold, the label is charged by a charger and is statically adsorbed by the inner wall of the mold; or, as in Fig. 2, the first resin material part is so designed that the shoulder and the edge of the bottom have an angular edge shape so that the label could be self-supporting in the mold and the label is thereby fixed to the inner wall of the mold. This embodiment of the mold design is preferred since the mold does not require the working to form therein the suction hole that has heretofore been attained in in-mold film and the mold is therefore economical. In Fig. 2, the shoulder of the first resin material part may be completely angular.

After the first resin material part is formed and before the step (2) of forming a second resin material part, the first resin material part may be decorated by direct printing through screen printing, or foil pressing by hot stamping, or inkjet or laser printing (letter printing), or adhesive label adhesion, etc.

In the step (2), a second resin material part is formed by injection molding in such a manner that the label is completely covered on the surface of the labeled first resin material part formed in the step (1). This is attained in the closed second mold. In this stage, the mold is so closed that the label could be completely buried in the mold. The cavity shape of the second mold is determined in accordance with the shape of the second resin material part to be formed. In case where the first resin material part has a shape of container, the second mold is preferably so designed that it can be closed outside the first resin material part. In this, the first resin material part is arranged inside the second mold, and serves as the mold (male mold) or a part of the mold (male mold) to form the inside of the second resin material part. Afterwards, the mold is closed with the second mold as the female mold part having a cavity structure, and a second resin material is injected to form a composite container.

As a result of the step (2), a composite container can be produced in which a second resin material part having a desired part can be formed in a desired position. Preferably, the second resin material part is formed to have a shape of container, and accordingly, the first resin material part and the second resin material part are integrated to be a composite container with the label buried therein.

In carrying out the step (2), an additional label may be fixed to the inner wall of the second mold (female mold) prior to the injection molding. Accordingly, a composite container can be produced, which has a second label fused to the outer surface of the second resin material part in addition to the label buried between the first resin material part and the second resin material part.

Like that for the first resin material part, the apparatus to form the second resin material part may be a combination of an injection device and a mold-clamping device known in the art, optionally combined with a container insertion and take-out robot, a label inserter, etc. Insertion of the first resin material part into the apparatus and taking out of the composite container may be attained by hand in every one shot.

The outer surface of the second resin material part may have a smooth mirror-finished face and may be glossy or may be roughened and frosted to be a pearskin-finished face or may be embossed irregularities, by specifically working the inner wall of the second mold (female mold) to be used. Preferred is a smooth surface. The decoration to be individually given to the outside of the second resin material part may be made simultaneously with the formation of the second resin material part or after the formation of the second resin material part.

In that way, an injection-molded composite container can be produced, in which a label is buried between the first resin material part and the second resin material part and both faces of the label are fused and integrated with the resin materials. For example, it is possible to produce a container comprising a side wall and a bottom, in which a label is buried inside the side wall to surround it, or in which one or more curved or folded labels are buried inside the side wall. Even when the container of the type with a label buried therein is desired to be produced according to conventional methods, the label is separated from the resin material, or air remains between the resin material and the label, or the label is wrinkled or waved, and after all the label could not fused and integrated with the resin material. Label fusion and integration has become possible for the first time according to the novel production method of the invention, and accordingly, an injection-molded composite container has been provided for the first time by the invention, in which both faces of the label are fused and integrated with the resin materials.

The obtained composite container may be further processed in an additional step similar to the step (2) thereby forming a third resin material part therein. In this, the third resin material part may be formed on the surface of the first resin material part, or on the surface of the second resin material part, or it may be formed to reach both the surfaces of the first resin material part and the second resin material part. In case where the second label is fused to the container in the step (2), the third resin material part may be formed to bury the second label therein. Further, a third label may be fused to the surface of the third resin material part.

Similarly, a fourth resin material part may be formed, and a label may be fused to the surface thereof. These applications and modifications may be readily made by those skilled in the art.

### (Concrete Production Embodiment)

A concrete production embodiment of carrying out the production method of the invention mentioned above is described. The production embodiment mentioned below is merely one example, and the production method of the invention should not be limitatively interpreted by this production embodiment.

This production embodiment is to produce a composite container, in which both the first resin material part and the second resin material part have a shape of container, and a label is buried between the inner first resin material part and the outer second resin material part. In this, the first resin material part is referred to as an inner container part and the second resin material part is as an outer container part.

The composite container can be produced by the use of a molding apparatus for composite containers as in Fig. 1, which comprises two injection-molding machines 1a and 1b, an inner container part molding machine and an outer container part molding machine; a label inserter (not shown); a robot 2 for taking out an inner container part; a conveyor 4 for transporting the taken-out inner container part to the outer container part molding machine; a robot 5 for inserting an inner container part and for taking out a composite container; a conveyor 3 for transporting a composite container, etc.

The molding process is described. First, an inner container part is molded in the former-stage inner container part injection-molding machine 1a that comprises a combination of an injection device and a mold-clamping device. In this stage, a label is previously inserted in to the mold by the use of a label inserter or the like, and is arranged and fixed in a desired position of the inner all of the male mold part according to a well-known method by suction or static electricity. Next, the mold is closed with a male mold part, and a molten resin of a first resin material is injected into the mold to form an inner container part with the label fused and integrated with the outer periphery thereof. The size of the injection-molding machine 1a may be selected depending on the size of the container, the number of the containers to be produced, and the size of the mold.

Next, the label-fused inner container part is taken out of the mold by the inner container part take-out robot 2, and subsequently the inner container part is fitted to the jig on the traveler 4 by the inner container part take-out robot 2. The jig with the inner container part fitted thereto is transported to the side of the latter-stage molding machine 1b by the traveler 4. On the traveler 4, additional decoration may be given to the inner container part, for example, by laser printing (letter printing) or the like.

Next, by the robot 5 for inserting an inner container part and for taking out a composite container, the label-fused inner container part is removed from the jig, and subsequently also by the robot 5 for inserting an inner container part and for taking out a composite container, it is inserted into the mold of the molding machine 1b and set in the core part of the male mold. With that, the inner container part is sucked by the suction device connected to the core part so that it is fixed in a predetermined position of the mold. In that manner, the inner container part serves as a male mold (or a part thereof) in molding an outer container part around it.

Next, the mold is closed with the female mold part and a molten resin of a second resin material is injected thereinto to thereby form an outer container part with the label fused and integrated with the inner periphery thereof, and finally, a composite container is formed comprising the inner container part, the outer container part and the label fused together. The size of the injection-molding machine 1b may be selected depending on the size of the container, the number of the containers to be produced, and the size of the mold.

After the production of the composite container is finished by the injection-molding machine 1b for the outer container part, the robot 5 for inserting an inner container part and for taking out a composite container takes out the composite container from the mold, then sets a new inner container part of the next batch in the mold, puts the composite container on the conveyor 3 for composite container transportation, and stands by until the inner container part of the next batch is transported by the jig of the traveler 4. The operational process is repeated to produce composite containers.

In the above-mentioned molding equipment, the robot 2 for taking out an inner container part has one chuck disc equipped with suckers of the number corresponding to the number of the products to be produced in one shot. The robot 5 for inserting an inner container part and for taking out a composite container has a two-disc configuration composed of an insertion chuck disc for transporting the inner container part from the traveler 4 to the latter-stage injection-molding machine, and a take-out chuck disc for taking out the composite container produced in the latter-stage injection-molding machine, out of the mold. Having the characteristics, the molding equipment can produce composite containers efficiently.

An especially important matter in the production method for composite containers is that the inner container part is charged into the mold for the outer container part with no misalignment both in the vertical direction and in the horizontal direction inside the mold. In case where the inner container part is misaligned or inclined from the core part of the mold and therefore it is not installed completely in the predetermined position during the step of molding the outer container part, products of the desired quality could not be obtained and, as the case may be, the mold and the extruder may be fatally damaged. Accordingly, it is important to take measures for positioning and aligning all the inj ection-molding machines 1a and 1b, the robot 2 for taking out an inner container part, the traveler 4, the jig of the traveler, the robot 5 for inserting an inner container part and for taking out a composite container and the pitch between the products in the mold, and bolt-fixing the individual devices so that they are not moved by earthquake or by vibration in molding operation.

### EXAMPLES

The invention is described more concretely with reference to the following Examples. According to the methods described below or according to methods similar thereto, the injection-molded composite container of the invention can be produced, which is characterized in that the label is buried in a resin material and both faces of the label are fused and integrated with the resin material. Specifically, the material, its amount and ratio, and the production process shown in the following Production Examples and Working Examples may be suitably modified or changed not overstepping the scope of the invention. Accordingly, the invention should not be limitatively interpreted by the Examples mentioned below.

Production Examples for the label substrate useful to understand the invention are shown below.

### (Production Example 1 for Label Substrate)

A resin composition (A) comprising 88% by weight of propylene homopolymer (trade name "Novatec PP MA8Q" by Nippon Polypro), 10% by weight of high-density polyethylene (trade name "Novatec HD HJ580" by Nippon Polyethylene) and 2% by weight of calcium carbonate powder having a mean particle size of 1.5 µm was melt-kneaded at 250°C using an extruder, then extruded out through a die into a film, and the film was cooled to a temperature of about 50°C. The film was again heated at about 153°C, and then stretched by 4 times in the machine direction based on the peripheral speed of rolls to give a monoaxially-stretched film to be a core layer.

On the other hand, a resin composition (B) comprising 85% by weight of propylene homopolymer (trade name "Novatec PP MA3AQ" by Nippon Polypro), 5% by weight of high-density polyethylene (trade name "Novatec HD HJ580" by Nippon Polyethylene) and 10% by weight of calcium carbonate powder having a mean particle size of 1.5 µm was melt-kneaded at 240°C using a different extruder, and this was filmwise extruded out through a die onto the surface of the above-mentioned monoaxially-stretched film and laminated thereon to give a laminate of surface layer/core layer (B/A).

Further, as a back layer, a resin composition (C) comprising 93% by weight of propylene homopolymer (trade name "Novatec PP MA3AQ" by Nippon Polypro), 6% by weight of high-density polyethylene (trade name "Novatec HD HJ580" by Nippon Polyethylene) and 1% by weight of calcium carbonate powder having a mean particle size of 1.5 µm, and as a heat seal layer, a resin composition (D) comprising a mixture of 75% by weight of ethylene/1-hexene copolymer (1-hexene content 22% by weight, degree of crystallinity of 30%, number-average molecular weight 23,000) prepared through copolymerization of ethylene and 1-hexene with a metallocene catalyst and having MFR of 18 g/10 min and a density of 0.898 g/cm³ and 25% by weight of high-pressure-process low-density polyethylene having MFR of 4 g/10 min, a density of 0. 92 g/cm³, a degree of crystallinity (X-ray method) of 40% and a number-average molecular weight of 18,000 were separately melt-extruded at 230°C using different extruders, then fed into one co-extrusion die, laminated in the die (C/D), and filmwise extruded out through the die and laminated onto the core layer side (A side) of the above-mentioned laminate (B/A) in such a manner that the heat seal layer could be the outermost layer, thereby giving a four-layered laminate of surface layer/core layer/back layer/heat seal layer (B/A/C/D). The heat seal layer side of the obtained laminate was applied to an embossing roll composed of a metal roll and a rubber roll (150 lines/inch, depth 40 µm, reversed gravure type), whereby the heat seal layer (D) side was embossed with a 0.17 mm-wide pattern.

The four-layered laminate was led into a tenter oven, again heated up to 160°C, then stretched by 7 times in the cross direction using the tenter, thereafter heat-set at 164°C, then cooled to 55°C, and trimmed on both sides thereof to give a transparent polyolefin film (synthetic paper) for use for the label in the invention. Its thickness was 75 µm, and its degree of opacity was 14%.

### (Production Example 2 for Label Substrate)

A resin composition (A) comprising 67% by weight of propylene homopolymer (trade name "Novatec PP MA8Q" by Nippon Polypro), 10% by weight of high-density polyethylene (trade name "Novatec HD HJ580" by Nippon, Polyethylene) and 23% by weight of calcium carbonate powder having a mean particle size of 1.5 µm was melt-kneaded at 250°C using an extruder, then extruded out through a die into a film, and the film was cooled to a temperature of about 50°C. The film was again heated at about 150°C, and then stretched by 4 times in the machine direction based on the peripheral speed of rolls to give a monoaxially-stretched film to be a core layer.

On the other hand, a resin composition (B) comprising 51. 5% by weight of propylene homopolymer (trade name "Novatec PP MA3AQ" by Nippon Polypro), 3.5% by weight of high-density polyethylene (trade name "Novatec HD HJ580" by Nippon Polyethylene), 42% by weight of calcium carbonate powder having a mean particle size of 1. 5 µm and 3% by weight of titanium oxide powder having a mean particle size of 0.8 µm was melt-kneaded at 240°C using a different extruder, and this was filmwise extruded out through a die onto the surface of the above-mentioned monoaxially-stretched film and laminated thereon to give a laminate of surface layer/core layer (B/A).

Further, as a back layer, a resin composition (C) comprising 51.5% by weight of propylene homopolymer (trade name "Novatec PP MA3AQ" by Nippon Polypro), 3.5% by weight of high-density polyethylene (trade name "Novatec HD HJ580" by Nippon Polyethylene), 42% by weight of calcium carbonate powder having a mean particle size of 1. 5 µm and 3% by weight of titanium oxide powder having a mean particle size of 0.8 µm, and as a heat seal layer, a resin composition (D) comprising a mixture of 75% by weight of ethylene/1-hexene copolymer (1-hexene content 22% by weight, degree of crystallinity of 30%, number-average molecular weight 23,000) prepared through copolymerization of ethylene and 1-hexene with a metallocene catalyst and having MFR of 18 g/10 min and a density of 0.898 g/cm³ and 25% by weight of high-pressure-process low-density polyethylene having MFR of 4 g/10 min, a density of 0.92 g/cm³, a degree of crystallinity (X-ray method) of 40% and a number-average molecular weight of 18,000 were separately melt-extruded at 230°C using different extruders, then fed into one co-extrusion die, laminated in the die (C/D), and filmwise extruded out through the die and laminated onto the core layer side (A side) of the above-mentioned laminate (B/A) in such a manner that the heat seal layer could be the outermost layer, thereby giving a four-layered laminate of surface layer/core layer/back layer/heat seal layer (B/A/C/D). The heat seal layer side of the obtained laminate was applied to an embossing roll composed of a metal roll and a rubber roll (150 lines/inch, depth 40 µm, reversed gravure type), whereby the heat seal layer (D) side was embossed with a 0.17 mm-wide pattern.

The four-layered laminate was led into a tenter oven, again heated up to 155°C, then stretched by 7 times in the cross direction using the tenter, thereafter heat-set at 164°C, then cooled to 55°C, and trimmed on both sides thereof to give a nontransparent polyolefin film (synthetic paper) for use for the label in the invention. Its thickness was 100 µm, and its degree of opacity was 94%.

### (Production Example 3 for Label Substrate)

A resin composition (A) prepared by mixing 81% by weight of propylene homopolymer (trade name "Novatec PP MA8Q" by Nippon Polypro), 3% by weight of high-density polyethylene (trade name "Novatec HD HJ360" by Nippon Polyethylene) and 16% by weight of calcium carbonate was melt-kneaded in an extruder set at a temperature of 250°C, then sheetwise extruded out through a die, and cooled in a cooling unit to give an unstretched sheet. Next, the sheet was again heated up to a temperature of 150°C, and stretched by 5 times in the machine direction using rolls each running at a different peripheral speed, thereby giving a 5-time MD-stretched film (core layer).

Further, as a surface layer, a resin composition (B) prepared by mixing 54% by weight of propylene homopolymer (trade name "Novatec PP MA3AQ" by Nippon Polypro) and 46% by weight of calcium carbonate was melt-kneaded in a different extruder at 250°C, then sheetwise extruded out through a die, and laminated onto both faces of the 5-time MD-stretched film obtained in the above-mentioned step, thereby giving a three-layered laminate film. Next, the three-layered laminate film was cooled to a temperature of 60°C, then again heated in an oven up to a temperature of 155°C, and stretched by 7. 5 times in the cross direction using a tenter (areal draw ratio: 37.5 times), then annealed at a temperature of 165°C and cooled to a temperature of 60°C, and trimmed on both sides to give a three-layered (monoaxially-stretched/biaxially-stretched/monoaxially-stre tched), thermoplastic resin stretched film having a thickness of 60 µm (B/A/B = 15 µm/30 µm/15 µm) and having a degree of opacity of 95%, which is a nontransparent polyolefin film for use for the label in the invention.

### (Production Example 4 for Label Substrate)

A resin composition (A) of 100% by weight of propylene homopolymer (trade name "Novatec PP MA3U" by Nippon Polypro), a resin composition (B) prepared by adding, as additives, 5 parts by weight of an antistatic agent (trade name "Novatec LL LX-AS" by Nippon Polyethylene) and 5 parts by weight of an antiblocking agent (trade name "Kernel KMB32F" by Nippon Polyethylene) to 100 parts by weight of ethylene/1-hexene copolymer (trade name "Kernel KF360T" by Nippon Polyethylene), and a resin composition (C) prepared by adding 2 parts by weight of an antiblocking agent (trade name "Novatec PP FMB1650B" by Nippon Polypro" to 100 parts by weight of a mixture of 50% by weight of propylene homopolymer (trade name "Novatec PP MA3U" by Nippon Polypro), 20% by weight of propylene homopolymer (trade name "Novatec PP FB3C" by Nippon Polypro) and 30% by weight of maleic acid-modified ethylene/vinyl acetate copolymer (trade name "Modic AP A515" by Nippon Polyethylene) were separately meld-kneaded at 240°C using different extruders, these were fed into one co-extrusion T-die, and laminated in the T-die in three layers of B/A/C, thereafter sheetwise extruded out through the T-die at 240°C, and led between a semi-mirror-type chill roll and a matted rubber roll, cooled therebetween under a nip pressure (linear pressure of about 1.5 kg/cm), and then trimmed on both sides thereof to give a transparent unstretched polyolefin film for use for the label in the invention. Its thickness was 80 µm and its degree of opacity was 13%.

### (Production Example 5 for Label Substrate)

An ethylene/vinyl acetate copolymer resin-type heat sealant (trade name "Adcoat AD1790-15" by Toyo Morton) was applied onto one side of a commercial polyester film (trade name "O300E" by Mitsubishi plastics, having a thickness of 100 µm) in an amount, as solid, of 3 g/m² by gravure-coating, and dried thereon to give a transparent polyester film for use for the label in the invention. Its degree of opacity was 10%.

Production Examples for the label for use in the composite container useful to understand the invention are shown below.

### (Production Example 1 for Label)

The transparent polyolefin film obtained in Production Example 1 for Label Substrate was cut into a Kiku-han size. On the surface to be decorated of the surface layer (layer B) side of the sheet, a logo and geometric pattern was printed using a sheet-fed offset printer and a UV offset process ink. After the printing, an ethylene/vinyl acetate copolymer resin-type heat sealant (trade name "Adcoat AD1790-15" by Toyo Morton) was applied onto the printed surface side in an amount, as solid, of 2 g/m² by Mayer-bar coating, and dried to form a heat seal layer thereon. This was blanked into a fan shape in accordance with the shape of a container, thereby giving a label for use in the composite container of the invention.

### (Production Example 2 for Label)

The nontransparent polyolefin film obtained in Production Example 2 for Label Substrate was cut into a Kiku-han size. On the surface to be decorated of the surface layer (layer B) side of the sheet, a logo and geometric pattern was printed using a sheet-fed offset printer and an oily offset process ink. Further a foil was pressed onto the printed surface of the printed sheet by hot-stamping thereon. Thus printed, the substrate was blanked into a fan shape in accordance with the shape of a container, and at the same time as the blanking, this was mechanically perforated with a needle to form therein perforations having a pore side of 0. 6 mm at a pore-to-pore pitch of 10 mm, thereby giving a label for use in the composite container of the invention.

### (Production Example 3 for Label)

The nontransparent polyolefin film obtained in Production Example 3 for Label Substrate was cut into a Kiku-han size. Both sides of the sheet are decorated here. On one side of the sheet, an information of product name and bar code was printed, and on the other side thereof, a geometric pattern was printed, using a sheet-fed printer and a UV offset process ink. After the printing, a polyolefin-type hot-melt adhesive (trade name "F Coat" by Nippon Kako Paint) was applied onto the geometric pattern-printed surface side by Mayer-bar coating, and dried, and then this was blanked into a fan shape in accordance with the shape of a container, thereby giving a label for use in the composite container of the invention.

### (Production Example 4 for Label)

The surface of the layer C side of the transparent polyolefin film obtained in Production Example 4 for Label Substrate is decorated here. Using a letter press printer and an UV offset process ink, a logo and geometric pattern was printed on the surface of the film. After the printing, this was blanked into a fan shape in accordance with the shape of a container, thereby giving a label for use in the composite container of the invention.

### (Production Example 5 for Label)

Using an RI printing tester and a UV-curable ink (trade name "UV161-Ai" by T & K TOKA), the transparent polyester film obtained in Production Example 5 for Label Substrate was printed in a mode of solid printing, on the side thereof not coated with heat sealant. An ethylene/vinyl acetate copolymer resin-type heat sealant (trade name "Adcoat AD1790-15" by Toyo Morton) was applied onto the cured printed surface in an amount, as solid, of 2 g/m² by Mayer-bar coating, and dried in an oven set at 40°C for 2 minutes to thereby form a heat seal layer also on the printed surface side. This was blanked into a fan shape in accordance with the shape of a container, thereby giving a label for use in the composite container of the invention.

### (Production Example 6 for Label)

The surface of the layer B side of the transparent polyolefin film obtained in Production Example 1 for Label Substrate is decorated here. Using a gravure printer and a leafing type metallic ink, a logo and geometric pattern was printed on the surface of the film. Using a laminate film (trade name "Lumirror P025" by Toray, having a thickness of 12 µm) and an adhesive (trade name "TM595/CAT56" by Toyo Morton, two-pack adhesive), a PET film was dry-laminated on the printed surface of the film. Thus processed, the substrate was blanked into a fan shape in accordance with the shape of a container, and at the same time as the blanking, this was mechanically perforated with a needle to form therein perforations having a pore side of 0.6 mm at a pore-to-pore pitch of 10 mm, thereby giving a label for use in the composite container of the invention.

### (Production Example 7 for Label)

The nontransparent polyolefin film obtained in Production Example 2 for Label Substrate was cut into a Kiku-han size, and the surface of the surface layer (layer B) side thereof is decorated here. Using a sheet-fed offset printer and an oily offset process ink, a logo, a company name, a contact name and an geometric pattern were printed on the surface of the film. A polyolefin-type hot-melt adhesive (trade name "ZAP-426" by Mitsuwa Chemical Laboratory, trial product) was applied onto the printed surface of the film in an amount, as solid, of 1 g/m², and dried to thereby form a heat seal layer also on the printed surface. Thus printed, the substrate was blanked into a fan shape in accordance with the shape of a container, thereby giving a label for use in the composite container of the invention.

Production Examples for composite containers useful to understand the invention are shown below.

### (Example 1)

A mold for forming an inner container part having a cross-sectional configuration as in Fig. 2 and having an inner diameter of 55 mm and an inner capacity of about 60 ml, and capable of forming four such parts in one shot, was fitted to an injection-molding machine comprising a resin extruder and a mold-clamping unit (trade name "ES3000 ELJECT" by Nissei Plastic Industrial). The label obtained in Production Example 1 for Label was inserted by hand into the female mold part of the mold in such a manner that the printed surface of the label could be in contact with the surface of the mold, and the mold was clamped under a clamping pressure of about 150 tons. As a resin material for an inner container part, a propylene homopolymer (trade name "Novatec PP MG2T" by Nippon Polypro) was melt-kneaded in an extruder, and then injected into the mold under an injection pressure of about 2 tons. After cooled, the inner container part with the label fused to the outer periphery thereof was taken out of the mold. Next, a mold capable of forming four outer container parts in one shot was fitted to a different injection-molding machine comprising a resin extruder and a mold-clamping unit (trade name "ES3000 ELJECT" by Nissei Plastic Industrial). The obtained inner container part was inserted by hand into the male mold part of the mold, then fixed therein under suction, and the mold was clamped under a clamping pressure of about 150 tons. As a resin material for an outer container part, a propylene homopolymer (trade name "Prime Polypro J850NA" by Prime Polymer) was melt-kneaded in an extruder, and then injected into the mold under an injection pressure of about 2 tons, thereby molding an outer container part. After cooled, this was taken out of the mold to give a composite container 20 (Fig. 3) comprising the inner container part 21, the outer container part 22 and the label 23 fused and integrated together as in Fig. 3. In the composite container, the inner container part is transparent, the outer container part is transparent and the label is transparent; and via the container, the print on the label is visible. In this, since the label and the container are integrated, the print on the label is vividly visible with no blurring.

### (Example 2)

According to the same process as in Example 1 but using the label obtained in Production Example 2 for Label and using, as the resin material for the inner container part, a resin composition prepared by mixing a titanium master batch with a propylene homopolymer (trade name "Novatec PP MG2T" by Nippon Polypro) to have a titanium dioxide concentration of 2% by weight, a composite container was produced in which the outer container part, the inner container part and the label were fused and integrated together. In the composite container, the inner container part is white and nontransparent, the outer container part is transparent and the label is nontransparent; and via the outer container part, the print on the label is visible. In this, since the label and the outer container part are integrated, the print on the label is vividly visible with no blurring.

### (Example 3)

According to the same process as in Example 1 but using the label obtained in Production Example 3 for Label and, in forming the inner container part, inserting the label into the mold in such a manner that the surface of the label printed with information of product name, bar code and others could be in contact with the mold, a composite container was produced in which the outer container part, the inner container part and the label were fused and integrated together. In the composite container, the inner container part is transparent, the outer container part is transparent and the label is nontransparent; and via the outer container part and the inner container part, the decorations on both sides of the label are visible separately as individual information and pattern. In this, since the label and the container are integrated, the prints on the label are vividly visible with no blurring.

### (Example 4)

According to the same process as in Example 1 but using the label obtained in Production Example 4 for Label, a composite container was produced in which the outer container part, the inner container part and the label were fused and integrated together. In the composite container, the inner container part is transparent, the outer container part is transparent and the label is transparent; and from the outside of the container and via the outer container part, the print on the label is visible, and further, the contents of the container can be confirmed. In addition, the print on the label is visible from the inside of the container. The label and the container are integrated, and the print on the label is vividly visible with no blurring.

### (Example 5)

Using the same apparatus and mold as in Example 1 and according to the same process as therein, in which, however, the label obtained in Production Example 5 for Label was used and, as the resin material for the inner container part and the outer container part, polyethylene terephthalate (trade name "IP 142B" by Bell Polyester Products) was used, a composite container was produced in which the outer container part, the inner container part and the label were fused and integrated together. In the composite container, the inner container part is transparent, the outer container part is transparent and the label is transparent; and from the outside of the container and via the outer container part, the print on the label is visible, and further, the contents of the container can be confirmed. In addition, the print on the label is visible from the inside of the container. The label and the container are integrated, and the print on the label is vividly visible with no blurring.

### (Example 6)

According to the same process as in Example 1 but using the label obtained in Production Example 6 for Label and using, as the resin material for the outer container part, polyethylene terephthalate (trade name "IP 142B" by Bell Polyester Products), a composite container was produced in which the outer container part, the inner container part and the label were fused and integrated together. In the composite container, the inner container part is transparent, the outer container part is transparent and the label is nontransparent; and via the outer container part, the print on the label is visible. The label and the container are integrated, and the print on the label is vividly visible with no blurring.

### (Example 7)

According to the same process as in Example 1 but using the label obtained in Production Example 2 for Label and, in forming the inner container part in the former stage, the label was inserted into the mold with its surface and back reversed so that the printed surface thereof could not be in contact with the mold surface (but could face the mold cavity), a composite container was produced in which the outer container part, the inner container part and the label were fused and integrated together. Next, only the surface of the outer container part of the composite container was decorated with a metal gloss through aluminium vapor deposition thereon, and further this was directly printed thereon through screen printing. In the composite container, the inner container part is transparent, the outer container part is nontransparent owing to metal deposition thereon, and the label is nontransparent; and via the outer container part, the label is invisible, but via the inner container part, the print on the label is visible. The label and the container are integrated, and from the inside of the composite container, the print on the label is vividly visible with no blurring.

### (Example 8)

According to the same process as in Example 1 but using an olefinic thermoplastic ionomer (trade name "Surlyn PC2000" by DuPont) as the resin material for the outer container part, a composite container was produced in which the outer container part, the inner container part and the label were fused and integrated together. In the composite container, the inner container part is transparent, the outer container part is transparent and the label is transparent; and via the container, the print on the label is visible. The label and the container are integrated, and the print on the label is vividly visible with no blurring.

### (Example 9)

According to the same process as in Example 2 but using an olefinic thermoplastic ionomer (trade name "Himilan 1705" by Mitsui-DuPont Polychemical) as the resin material for the outer container part, a composite container was produced in which the outer container part, the inner container part and the label were fused and integrated together. In the composite container, the inner container part is nontransparent, the outer container part is transparent and the label is nontransparent; and via the outer container part, the print on the label is visible. The label and the container are integrated, and the print on the label is vividly visible with no blurring.

### (Example 10)

According to the same process as in Example 1 but using an olefinic thermoplastic elastomer (trade name "Zelas MC717" by Mitsubishi Chemical) as the resin material for the outer container part, a composite container was produced in which the outer container part, the inner container part and the label were fused and integrated together. In the composite container, the inner container part is transparent, the outer container part is transparent and the label is transparent; and via the container, the print on the label is visible. The label and the container are integrated, and the print on the label is vividly visible with no blurring.

### (Example 11)

According to the same process as in Example 2 but using the label obtained in Production Example 7 for Label, a composite container was produced in which the outer container part, the inner container part and the label were fused and integrated together. In the composite container, the inner container part is nontransparent, the outer container part is transparent and the label is nontransparent; and via the outer container part, the print on the label is visible. The label and the container are integrated, and the print on the label is vividly visible with no blurring.

### (Example 12)

According to the same process as in Example 2 but using the label obtained in Production Example 7 for Label and using, as the resin material for the outer container part, an olefinic thermoplastic ionomer (trade name "Himilan 1705" by Mitsui-DuPont Polychemical), a composite container was produced in which the outer container part, the inner container part and the label were fused and integrated together. In the composite container, the inner container part is nontransparent, the outer container part is transparent and the label is nontransparent; and via the outer container part, the print on the label is visible. The label and the container are integrated, and the print on the label is vividly visible with no blurring.

### (Example 13)

According to the same process as in Example 5 but using an olefinic thermoplastic ionomer (trade name "Surlyn PP2000" by DuPont) as the resin material for the outer container part, a composite container was produced in which the outer container part, the inner container part and the label were fused and integrated together. In the composite container, the inner container part is transparent, the outer container part is transparent and the label is transparent; and from the outside of the container and via the outer container part, the print on the label is visible, and further, the contents of the container can be confirmed. In addition, from the inside of the container, the print on the label is visible. The label and the container are integrated, and the print on the label is vividly visible with no blurring.

### (Comparative Example 1)

A mold capable of molding an outer container part having a tapered cross-sectional profile was fitted to an injection-molding machine comprising a resin extruder and a mold-clamping unit (trade name "ES3000 ELJECT" by Nissei Plastic Industrial). The mold was so designed that a label could be fixed to the core of the male mold part thereof through suction, and a gate was provided on the side of the female mold part through which resin could be injected into the mold. The label obtained in Production Example 1 for Label was wound by hand around the core of the male mold part of the mold in such a manner that the printed surface of the label could face the cavity, and fixed thereon through suction. The mold was clamped under a clamping pressure of about 150 tons. As a resin material for an inner container part, a propylene homopolymer (trade name "Prime Polypro J850NA" by Prime Polymer) was melt-kneaded in an extruder, and then injected into the mold under an injection pressure of about 2 tons. After cooled, the outer container part with the label fused to the inner peripheral wall thereof was taken out of the mold. Next, another mold capable of molding an inner container part was fitted to a different injection-molding machine comprising a resin extruder and a mold-clamping unit (trade name "ES3000 ELJECT" by Nissei Plastic Industrial). The mold is a male mold having a smaller core than that in the mold in the former stage, and a gate was connected to it for resin injection therethrough. The obtained outer container part was inserted by hand into the female mold side of the mold, and the mold was clamped under a clamping pressure of about 150 tons. A resin material for an inner container part, propylene homopolymer (trade name "Novatec PP MG2T" by Nippon Polypro) was melt-kneaded in an extruder, and then injected into the mold under an injection pressure of about 2 tons to form an inner container part. After cooled, this was taken out to be a composite container composed of the inner container part, the outer container part and the label. However, the producibility of the composite container was extremely poor; and in addition, regarding the quality, the label swelled since the once-adhered label peeled off in the interface owing to the shrinkage of the mold of the inner container part after the formation of the inner container part. As a result, though the print on the label could be visible via the container, the print on the label could not be seen vividly but was blurred, and the label and the container were not integrated together.

The result was the same also in the other cases where the labels produced in the other Production Examples were used and the other resins used in Examples were used, and double-layered containers where the label and the container were integrated could not be obtained.

## Claims

1. An injection-molded composite container (20) composed of a first resin material part (21), a second resin material part (22) and a label (23), wherein the label (23) is buried between the first resin material part (21) and the second resin material part (22), and both faces of the label (23) are fused and integrated with the resin materials,
wherein the first resin material part (21) is formed by injection-molding and has a shape of a container having an engagement part with a cap,
wherein the second resin material part (22) is positioned on the outside of the first resin material part (21), and
wherein the label (23) is arranged along the outer peripheral wall of the first resin material part (21) having a shape of a container,
wherein the label (23) comprises a heat seal layer on both sides thereof.

2. The injection-molded composite container (20) according to Claim 1, wherein the first resin material and the second resin material each are independently a resin composition comprising at least one thermoplastic resin selected from a group consisting of polyolefin resin, polyester resin, styrene resin, ethylene-vinyl acetate resin, polyamide, polycarbonate, polyvinyl chloride, polyoxymethylene, polymethyl methacrylate, polymethacrylstyrene, polyaryl sulfone and ionomer.

3. The injection-molded composite container (20) according to Claim 1 or 2, wherein the first resin material is a resin composition comprising at least one thermoplastic resin selected from a group consisting of high-density polyethylene, middle-density polyethylene, polypropylene, poly (4-methylpent-1-ene), polyethylene terephthalate, polybutylene terephthalate, polyethylene naphthalate, polybutylene succinate, polylactic acid, polystyrene, styrene-acrylonitrile resin, acrylonitrile-butadiene-styrene resin, ethylene-vinyl acetate resin, polyamide, polycarbonate, polyvinyl chloride, polyoxymethylene, polymethyl methacrylate, polymethacrylstyrene and polyaryl sulfone, and the second resin material is a resin composition comprising at least one thermoplastic resin selected from a group consisting of high-density polyethylene, middle-density polyethylene, polypropylene, poly (4-methylpent-1-ene), elastomer, ionomer, polyethylene terephthalate, polybutylene terephthalate, polyethylene naphthalate, polybutylene succinate, polylactic acid, amorphous polyethylene terephthalate, polystyrene, styrene-acrylonitrile resin, acrylonitrile-butadiene-styrene resin, ethylene-vinyl acetate resin, polyamide, polycarbonate, polyvinyl chloride, polyoxymethylene, polyvinyl alcohol, polybutene, polymethyl methacrylate, polymethacrylstyrene, polyarylate and polyaryl sulfone.

4. The injection-molded composite container (20) according to any one of Claims 1 to 3 composed of a first resin material part (21), a second resin material part (22) and a label (23), wherein a resin composition comprising the same resin material is used for the first resin material and the second resin material.

5. The injection-molded composite container (20) according to any one of Claims 1 to 3 composed of a first resin material part (21), a second resin material part (22) and a label (23), wherein the first resin material and the second resin material differ in the resin composition.

6. The injection-molded composite container (20) according to any one of Claims 1 to 5, wherein the second resin material part (22) also has a shape of a container, and/or wherein at least one of the first resin material part (21) and the second resin material part (22) is transparent, and/or wherein the substrate of the label (23) is formed from a polyolefin film or a polyester film wherein typically the surface and the back of the substrate of the label (23) is formed of a different material.

7. The injection-molded composite container (20) according to any one of Claims 1 to 6, wherein the label (23) is decorated, wherein typically the decoration is printed, and wherein typically the decoration is by metal foil, and wherein typically the decoration of the label (23) is visible through the resin material, wherein typically the decoration of the label (23) is arranged in the position visible from the inside of the container.

8. The injection-molded composite container (20) according to any one of Claims 1 to 7, wherein the label (23) has perforations, and/or wherein the outer surface of the injection-molded composite container (20) is decorated.

9. A method for producing an injection-molded composite container (20) composed of a first resin material part (21), a second resin material part (22) and a label (23), comprising:
(1) arranging and fixing a label (23) onto the inner wall of the female mold part of a first mold, closing the mold, and thereafter injecting a first resin material into the first mold and molding it to form a label-fused first resin material part (21); and
(2) closing the first resin material part as a male mold or a part thereof with a second mold as a female mold so as to completely bury the label (23) on the first resin material part (21), and injecting and molding a second resin materials to form a second resin material part (22) to cover the label (23) on the first resin material part (21), wherein both faces of the label (23) are fused and integrated with the resin materials,
wherein the label (23) comprises a heat seal layer on both sides thereof.

10. The method for producing an injection-molded composite container (20) according to Claim 9, wherein in (1), the first resin material part (21) is molded into a shape of a container having an engagement part with a cap, and/or wherein the second resin material part (22) is formed on the outside of the first resin material part (21).

11. The method for producing an injection-molded composite container (20) according to Claim 10, wherein the second resin material part (22) is also molded into a shape of a container, and/or wherein the first resin material and the second resin material differ in the resin composition, and/or wherein the first resin material and the second resin material are both a resin composition of the same resin material.

12. The method for producing an injection-molded composite container (20) according to any one of Claims 9 to 11, wherein the label (23) is decorated, and the degree of opacity of the first resin material part (21) and the second resin material part (22) is so defined that the decoration is visible through the first resin material part (21), the second resin material or both the two.

## Patentansprüche

1. Spritzgegossener Verbundwerkstoff-Behälter (20), der aus einem ersten Harzmaterialteil (21), einem zweiten Harzmaterialteil (22) und einem Etikett (23) zusammengesetzt ist, wobei das Etikett (23) zwischen dem ersten Harzmaterialteil (21) und dem zweiten Harzmaterialteil (22) eingebettet ist und beide Flächen des Etiketts (23) mit den Harzmaterialien verschmolzen und integriert sind,
wobei das erste Harzmaterialteil (21) durch Spritzgießen gebildet ist und die Form eines Behälters mit einem Eingriffsteil mit einem Deckel aufweist,
wobei das zweite Harzmaterialteil (22) an der Außenseite des ersten Harzmaterialteils (21) angeordnet ist, und
wobei das Etikett (23) entlang der äußeren Umfangswand des ersten Harzmaterialteils (21), das die Form eines Behälters aufweist, angeordnet ist,
wobei das Etikett (23) eine Heißsiegelschicht auf ihren beiden Seiten aufweist.

2. Spritzgegossener Verbundwerkstoff-Behälter (20) nach Anspruch 1, wobei das erste Harzmaterial und das zweite Harzmaterial jeweils unabhängig voneinander eine Harzzusammensetzung sind, die mindestens ein thermoplastisches Harz umfasst, das aus einer Gruppe, bestehend aus Polyolefinharz, Polyesterharz, Styrolharz, Ethylen-Vinylacetat-Harz, Polyamid, Polycarbonat, Polyvinylchlorid, Polyoxymethylen, Polymethylmethacrylat, Polymethacrylstyrol, Polyarylsulfon und Ionomer ausgewählt ist.

3. Spritzgegossener Verbundwerkstoff-Behälter (20) nach Anspruch 1 oder 2, wobei das erste Harzmaterial eine Harzzusammensetzung ist, die mindestens ein thermoplastisches Harz umfasst, das aus einer Gruppe, bestehend aus HDPE (Polyethylen hoher Dichte), Polyethylen mittlerer Dichte, Polypropylen, Poly (4-Methylpent-1-en), Polyethylenterephthalat, Polybutylenterephthalat, Polyethylennaphthalat, Polybutylensuccinat, Polymilchsäure, Polystyrol, Styrol-Acrylnitril-Harz, Acrylnitril-Butadien-Styrol-Harz, Ethylen-Vinylacetat-Harz, Polyamid, Polycarbonat, Polyvinylchlorid, Polyoxymethylen, Polymethylmethacrylat, Polymethacrylstyrol und Polyarylsulfon, ausgewählt ist, und das zweite Harzmaterial eine Harzzusammensetzung ist, die mindestens ein thermoplastisches Harz, das aus einer Gruppe, bestehend aus HDPE (Polyethylen hoher Dichte), Polyethylen mittlerer Dichte, Polypropylen, Poly (4-Methylpent-1-en), Elastomer, Ionomer, Polyethylenterephthalat, Polybutylenterephthalat, Polyethylennaphthalat, Polybutylensuccinat, Polymilchsäure, amorphes Polyethylenterephthalat, Polystyrol, Styrol-Acrylnitril-Harz, Acrylnitril-Butadien-Styrol-Harz, Ethylen-Vinylacetat-Harz, Polyamid, Polycarbonat, Polyvinylchlorid, Polyoxymethylen, Polyvinylalkohol, Polybuten, Polymethylmethacrylat, Polymethacrylstyrol, Polyarylat und Polyarylsulfon ausgewählt ist.

4. Spritzgegossener Verbundwerkstoff-Behälter (20) nach einem der Ansprüche 1 bis 3, der aus einem ersten Harzmaterialteil (21), einem zweiten Harzmaterialteil (22) und einem Etikett (23) zusammengesetzt ist, wobei eine Harzzusammensetzung, die dasselbe Harzmaterial umfasst, für das erste Harzmaterial und das zweite Harzmaterial verwendet worden ist.

5. Spritzgegossener Verbundwerkstoff-Behälter (20) nach einem der Ansprüche 1 bis 3, der aus einem ersten Harzmaterialteil (21), einem zweiten Harzmaterialteil (22) und einem Etikett (23) zusammengesetzt ist, wobei sich das erste Harzmaterial und das zweite Harzmaterial in der Harzzusammensetzung unterscheiden.

6. Spritzgegossener Verbundwerkstoff-Behälter (20) nach einem der Ansprüche 1 bis 5, wobei das zweite Harzmaterialteil (22) auch die Form eines Behälters aufweist, und/oder wobei mindestens das erste Harzmaterialteil (21) und/oder das zweite Harzmaterialteil (22) transparent ist, und/oder wobei das Substrat des Etiketts (23) aus einer Polyolefinschicht oder einer Polyesterschicht gebildet ist, wobei typischerweise die Oberfläche und die Rückseite des Substrats des Etiketts (23) aus unterschiedlichen Materialen gebildet sind.

7. Spritzgegossener Verbundwerkstoff-Behälter (20) nach einem der Ansprüche 1 bis 6, wobei das Etikett (23) verziert ist, wobei das Dekor typischerweise gedruckt ist, und wobei das Dekor typischerweise mit Metallfolie ausgebildet ist, und wobei das Dekor des Etiketts (23) typischerweise durch das Harzmaterial sichtbar ist, wobei das Dekor des Etiketts (23) typischerweise in der Position, die vom Inneren des Behälters sichtbar ist, angeordnet ist.

8. Spritzgegossener Verbundwerkstoff-Behälter (20) nach einem der Ansprüche 1 bis 7, wobei das Etikett (23) Perforationen aufweist und/oder wobei die äußere Oberfläche des spritzgegossenen Verbundwerkstoff-Behälters (20) verziert ist.

9. Verfahren zur Herstellung eines spritzgegossenen Verbundwerkstoff-Behälters (20), der aus einem ersten Harzmaterialteil (21), einem zweiten Harzmaterialteil (22) und eine einem Etikett (23) zusammengesetzt ist, umfassend:
(1) Anbringen und Befestigen eines Etiketts (23) auf die Innenwand des Negativformteils einer ersten Form, Schließen der Form, und danach Einspritzen eines ersten Harzmaterials in die erste Form und Formen desselben, um ein etikettverschmolzenes erstes Harzmaterialteil (21) auszubilden; und
(2) Schließen des ersten Harzmaterialteils als Positivform oder ein Teil davon mit einer zweiten Form als Negativform, um das Etikett (23) in dem ersten Harzmaterialteil vollständig einzubetten (21), und Einspritzen und Formen eines zweiten Harzmaterials, um ein zweites Harzmaterialteil (22) zum Abdecken des Etiketts (23) in dem ersten Harzmaterialteil (21) auszubilden, wobei beide Flächen des Etiketts (23) mit den Harzmaterialien verschmolzen und integriert werden, wobei das Etikett (23) eine Heißsiegelschicht auf seinen beiden Seiten aufweist.

10. Verfahren zur Herstellung eines spritzgegossenen Verbundwerkstoff-Behälters (20) nach Anspruch 9, wobei bei (1) das erste Harzmaterialteil (21) in die Form eines Behälters mit einem Eingriffsteil mit einem Deckel geformt wird, und/oder wobei das zweite Harzmaterialteil (22) auf der Außenseite des ersten Harzmaterialteils (21) ausgebildet wird.

11. Verfahren zur Herstellung eines spritzgegossenen Verbundwerkstoff-Behälters (20) nach Anspruch 10, wobei das zweite Harzmaterialteil (22) auch in die Form eines Behälters geformt wird, und/oder wobei sich das erste Harzmaterial und das zweite Harzmaterial in der Harzzusammensetzung unterscheiden, und/oder wobei das erste Harzmaterial und das zweite Harzmaterial beide eine Harzzusammensetzung desselben Harzmaterials sind.

12. Verfahren zur Herstellung eines spritzgegossenen Verbundwerkstoff-Behälters (20) nach einem der Ansprüche 9 bis 11, wobei das Etikett (23) verziert wird, und der Grad an Opazität des ersten Harzmaterialteils (21) und des zweiten Harzmaterialteils (22) so definiert ist, dass das Dekor durch das erste Harzmaterialteil (21), das zweite Harzmaterial oder durch die beiden sichtbar ist.

## Revendications

1. Contenant composite moulé par injection (20) composé d'une partie en premier matériau résine (21), d'une partie en second matériau résine (22) et d'une étiquette (23), dans lequel l'étiquette (23) est encastrée entre la partie en premier matériau résine (21) et la partie en second matériau résine (22), et les deux faces de l'étiquette (23) sont fusionnées et intégrées avec les matériaux résines,
dans lequel la partie en premier matériau résine (21) est formée par moulage par injection et présente une forme de contenant comportant une partie d'engagement avec un capuchon,
dans lequel la partie en second matériau résine (22) est positionnée sur l'extérieur de la partie en premier matériau résine (21), et
dans lequel l'étiquette (23) est agencée le long de la paroi périphérique extérieure de la partie en premier matériau résine (21) présentant une forme de contenant,
dans lequel l'étiquette (23) comprend une couche de thermo-scellage sur les deux côtés de celle-ci.

2. Contenant composite moulé par injection (20) selon la revendication 1, dans lequel le premier matériau résine et le second matériau résine sont chacun indépendamment une composition de résine comprenant au moins une résine thermoplastique sélectionnée parmi un groupe constitué de résine polyoléfine, de résine polyester, de résine styrène, de résine éthylène-acétate de vinyle, de polyamide, de polycarbonate, de chlorure de polyvinyle, de polyoxyméthylène, de méthacrylate de polyméthyle, de polyméthacrylstyrène, de polyarylsulfone et d'ionomère.

3. Contenant composite moulé par injection (20) selon la revendication 1 ou 2, dans lequel le premier matériau résine est une composition de résine comprenant au moins une résine thermoplastique sélectionnée parmi un groupe constitué de polyéthylène haute densité, de polyéthylène moyenne densité, de polypropylène, de poly (4-méthylpent-1-ène), de polyéthylène téréphtalate, de polybutylène téréphtalate, de polyéthylène naphtalate, de succinate de polybutylène, d'acide polylactique, de polystyrène, de résine styrène-acrylonitrile, de résine acrylonitrile-butadiène-styrène, de résine éthylène-acétate de vinyle, de polyamide, de polycarbonate, de chlorure de polyvinyle, de polyoxyméthylène, de méthacrylate de polyméthyle, de polyméthacrylstyrène et de polyarylsulfone, et le second matériau résine est une composition de résine comprenant au moins une résine thermoplastique sélectionnée parmi un groupe constitué de polyéthylène haute densité, de polyéthylène moyenne densité, de polypropylène, de poly (4-méthylpent-1-ène), d'élastomère, d'ionomère, de polyéthylène téréphtalate, de polybutylène téréphtalate, de polyéthylène naphtalate, de succinate de polybutylène, d'acide polylactique, de polyéthylène téréphtalate amorphe, de polystyrène, de résine styrène-acrylonitrile, de résine acrylonitrile-butadiène-styrène, de résine éthylène-acétate de vinyle, de polyamide, de polycarbonate, de chlorure de polyvinyle, de polyoxyméthylène, d'alcool polyvinylique, de polybutène, de méthacrylate de polyméthyle, de polyméthacrylstyrène, de polyarylate et de polyarylsulfone.

4. Contenant composite moulé par injection (20) selon l'une quelconque des revendications 1 à 3, composé d'une partie en premier matériau résine (21), d'une partie en second matériau résine (22) et d'une étiquette (23), dans lequel une composition de résine comprenant le même matériau résine est utilisée pour le premier matériau résine et le second matériau résine.

5. Contenant composite moulé par injection (20) selon l'une quelconque des revendications 1 à 3, composé d'une partie en premier matériau résine (21), d'une partie en second matériau résine (22) et d'une étiquette (23), dans lequel le premier matériau résine et le second matériau résine diffèrent en composition de résine.

6. Contenant composite moulé par injection (20) selon l'une quelconque des revendications 1 à 5, dans lequel la partie en second matériau résine (22) présente également une forme de contenant, et/ou dans lequel au moins une parmi la partie en premier matériau résine (21) et la partie en second matériau résine (22) est transparente, et/ou dans lequel le substrat de l'étiquette (23) est formé à partir d'un film de polyoléfine ou d'un film de polyester, dans lequel typiquement la surface et le dos du substrat de l'étiquette (23) sont formés de matériaux différents.

7. Contenant composite moulé par injection (20) selon l'une quelconque des revendications 1 à 6, dans lequel l'étiquette (23) est décorée, dans lequel typiquement la décoration est imprimée, et dans lequel typiquement la décoration est par feuille métallique, et dans lequel typiquement la décoration de l'étiquette (23) est visible à travers le matériau résine, dans lequel typiquement la décoration de l'étiquette (23) est agencée dans la position visible à partir de l'intérieur du contenant.

8. Contenant composite moulé par injection (20) selon l'une quelconque des revendications 1 à 7, dans lequel l'étiquette (23) comporte des perforations, et/ou dans lequel la surface extérieure du contenant composite moulé par injection (20) est décorée.

9. Procédé pour produire un contenant composite moulé par injection (20) composé d'une partie en premier matériau résine (21), d'une partie en second matériau résine (22) et d'une étiquette (23), comprenant :
(1) l'agencement et la fixation d'une étiquette (23) sur la paroi intérieure de la partie moule femelle d'un premier moule, la fermeture du moule, et après cela l'injection d'un premier matériau résine dans le premier moule et son moulage pour former une partie en premier matériau résine à étiquette fusionnée (21) ; et
(2) la fermeture de la partie en premier matériau résine, en tant que moule mâle ou partie de celui-ci, avec un second moule, en tant que moule femelle, afin d'encastrer complètement l'étiquette (23) sur la partie en premier matériau résine (21), et l'injection et le moulage d'un second matériau résine pour former une partie en second matériau résine (22) pour couvrir l'étiquette (23) sur la partie en premier matériau résine (21), dans lequel les deux faces de l'étiquette (23) sont fusionnées et intégrées avec les matériaux résines,
dans lequel l'étiquette (23) comprend une couche de thermo-scellage sur deux côtés de celle-ci.

10. Procédé pour produire un contenant composite moulé par injection (20) selon la revendication 9, dans lequel dans (1), la partie en premier matériau résine (21) est moulée en forme de contenant comportant une partie d'engagement avec un capuchon, et/ou dans lequel la partie en second matériau résine (22) est formée sur l'extérieur de la partie en premier matériau résine (21).

11. Procédé pour produire un contenant composite moulé par injection (20) selon la revendication 10, dans lequel la partie en second matériau résine (22) est également moulée en forme de contenant, et/ou dans lequel le premier matériau résine et le second matériau résine diffèrent en composition de résine, et/ou dans lequel le premier matériau résine et le second matériau résine sont tous les deux une composition de résine du même matériau résine.

12. Procédé pour produire un contenant composite moulé par injection (20) selon l'une quelconque des revendications 9 à 11, dans lequel l'étiquette (23) est décorée, et le degré d'opacité de la partie en premier matériau résine (21) et de la partie en second matériau résine (22) est défini de telle sorte que la décoration soit visible à travers la partie en premier matériau résine (21), le second matériau résine ou les deux.
